(19) **Europäisches Patentamt / European Patent Office / Office européen des brevets**

(11) **EP 1 554 938 B1**

(12) **EUROPEAN PATENT SPECIFICATION**

(45) Date of publication and mention
of the grant of the patent:
**18.07.2007 Bulletin 2007/29**

(51) Int Cl.:
*A23L 1/03* *(2006.01)*     *A23L 1/222* *(2006.01)*
*A23L 1/226* *(2006.01)*

(21) Application number: **03717547.8**

(22) Date of filing: **09.04.2003**

(86) International application number:
**PCT/JP2003/004513**

(87) International publication number:
**WO 2003/105599 (24.12.2003 Gazette 2003/52)**

(54) **FLAVOR DETERIORATION INHIBITOR AND INHIBITOR FOR THE GENERATION OF CITRAL DETERIORATION SMELL**

INHIBITOR GEGEN GESCHMACKSBEEINTRÄCHTIGUNG UND INHIBITOR GEGEN DIE ERZEUGUNG EINES DURCH CITRALBEEINTRÄCHTIGUNG ENTSTEHENDEN GERUCHS

INHIBITEUR DE DETERIORATION DE GOUT ET INHIBITEUR DE L'ODEUR DE DETERIORATION DU CITRAL

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **14.06.2002 JP 2002173545**
**14.06.2002 JP 2002173552**
**14.06.2002 JP 2002173553**
**14.06.2002 JP 2002173556**
**14.06.2002 JP 2002173582**
**14.06.2002 JP 2002173594**
**14.06.2002 JP 2002173600**
**14.06.2002 JP 2002173613**

(43) Date of publication of application:
**20.07.2005 Bulletin 2005/29**

(73) Proprietor: **OGAWA & CO., LTD.**
**Chuo-ku,**
**Tokyo 103-0023 (JP)**

(72) Inventors:
• **ADACHI, Kenji**
**Chiba-shi, Chiba 261-0026 (JP)**
• **MURANISHI, Shuichi**
**Akaiwa-gun, Okayama 709-0735 (JP)**
• **KIYOHARA, Susumu**
**Chiba-shi, Chiba 260-0834 (JP)**
• **SEKIGUCHI, Yuya**
**Urayasu-shi, Chiba 279-0043 (JP)**
• **MASUDA, Hideki**
**Chuo-ku, Tokyo 103-0015 (JP)**

(74) Representative: **Stenbäck, Maria Elisabeth**
**Awapatent AB,**
**P.O. Box 5117**
**200 71 Malmö (SE)**

(56) References cited:
**GB-A- 1 428 394**     **JP-A- 10 215 811**
**JP-A- 2002 104 987**     **JP-A- 2003 038 144**
**US-A- 5 445 836**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Technical Field

This invention, defined in claims 1 to 16, relates to a flavor deterioration inhibitor, which is derived from specific natural products and can be widely applied to foods containing flavor components, oral hygienic agents or flavors, and a method for inhibiting flavor deterioration. Also, this invention relates to an inhibitor for the generation of deterioration smell for citral or citral-containing products and a method for inhibiting the generation of deterioration smell.

Background Art

As one may feel taste and flavor of drinks, foods, or oral care products such as dentifrices or mouthwash (hereinafter referred to as "oral composition(s)") immediately when taken into the mouth, flavor of foods and others is an important factor similarly to various nutritional components. It is well-known that flavor of foods and others may be gradually subjected to deterioration during respective stages of manufacture, distribution, storage, etc. Heat, light, oxygen as well as water may be mentioned as factors involved in deterioration. As measures against flavor deterioration caused, especially, by oxygen, it has been hitherto made to develop containers or bags, which are made from synthetic resins and have lower oxygen permeability, to introduce the step for manufacturing foods under deoxygenation conditions or to add antioxidants and the like, whereas measures against other deterioration factors, especially, deterioration by light has been less considered. However, there have been recently increased manufactures and sales of foods packed in transparent glass containers, foods packed in semi-transparent plastic containers, foods packed in transparent bags and so on in order to improve the image of goods when displayed in the show windows. In addition, such a marketing style has become generalized wherein these foods are to be displayed over a long period under illumination of a fluorescent light in convenience stores and others. Then, oral compositions such as foods etc. have been more susceptible to influence by light than before, which leads to the results of flavor deterioration, etc. Now then, it has been required to develop a measure to show a particularly prominent effect on flavor deterioration by light and further to simultaneously have inhibiting effect on deterioration by heat during heat sterilization step or in storage with heating. Flavor deterioration by light is caused by decomposition of flavor components by light irradiation, which leads to loss of aroma and delicious taste, and further by conversion of decomposed products to components with bad smell and unpalatable taste. There have been proposed milk-containing acidic drinks wherein rutin, morin or quercetin is incorporated to mainly prevent the generation of substances with bad smell and unpalatable taste and improve their keeping quality (Japanese Examined Patent No. Hei 4-21450), a method for preventing flavor deterioration by sunlight which comprises using chlorogenic acid, caffeic acid or ferulic acid, which is derived from extract of raw coffee beans, together with vitamin C, rutin or quercetin (Japanese Patent Kokai No. Hei 4-27374) and others. And further, there has been suggested a method for preventing deterioration of coffee extract by incorporating tea flavonoids obtained by extracting tea leaves such as black tea or oolong tea leaves with water, hydrous alcohol, etc., rutin, rosemary extract, sage extract or sodium citrate (Japanese Patent Kokai No. Sho 62-269642). However, related art deterioration inhibitors derived from natural products is generally recommendable in view of high safety, but they should be used in a considerably large amount to exert inhibiting effect on flavor deterioration, which results in deficient practicability such as adverse influence on the original taste or flavor owned by foods by the taste or smell of deterioration inhibitors themselves. Incidentally, there has been suggested a method for inhibiting deterioration by improved packaging means of oral compositions using containers or bags with suppressed light transmission, but this is also not satisfactory, considering both aspects of cost and inhibiting effect on flavor deterioration. Accordingly, there has been desired a novel flavor deterioration inhibitor derived from natural products as inhibiting measure, which would achieve a sufficient effect using a small amount without any influence on the original flavor of oraLcompositions and is highly economical.

On the other hand, citral is an important component having a characteristic, lemon-like aroma, but it is known that its aroma declines by heating or with lapse of time to generate off flavor [Peter Schieberle and Werner Grosch; J. Agric. Food Chem., 36, 797-800(1988)]. The citral in citral-containing products may decrease, especially under acidic conditions, in respective steps during manufacture, distribution or storage period, and its structure may be altered according to the reaction of cyclization, hydration, isomerization, etc., which could cause fresh feeling to be lowered. In addition, substances generating very strong deterioration smell, or p-methylacetophenone and p-cresol, are produced by oxidation reaction of the product derived from citral, which leads to a significantly lowered quality of products. For various substances causing deterioration smell as generated from citral, there have been hitherto made various attempts to prevent its generation such as addition of antioxidants, for example, isoascorbic acid etc. [Val E. Peacock and David W. Kuneman; J. Agric. Food Chem., 33, 330-335(1985)], but there has not been yet found any effective method for inhibiting the generation of p-cresol and p-methylacetophenone.

Then, there has been desired a citral-deterioration inhibitor or a method for inhibiting citral-deterioration, which has a potent generation-inhibiting effect on degeneration smell of citral generated by heating or with lapse of time, especially the generation of p-cresol and p-methylacetophenone, and which is also safe and inexpensive.

Disclosure of the Invention

It is an object of this invention to provide a flavor deterioration inhibitor, which can solve the problems of related art and has a high safety without any influence on original flavor of oral compositions, more specifically, to provide a flavor deterioration inhibitor, which can inhibit flavor deterioration caused mainly by light or else by heat, oxygen, etc. in respective stages of manufacture, distribution, storage and the like of oral compositions, an oral composition with a stabilized quality which comprises a prescribed amount of said inhibitor, as well as a method for inhibiting flavor deterioration wherein said inhibitor is incorporated in a prescribed amount to stabilize quality of foods and others.

And further, in the light of the above problems of related art, it is another object of this invention to provide an inhibitor for the generation of deterioration smell and a method for inhibiting the generation of deterioration smell, which can inhibit the generation of substances (p-cresol and p-methylacetophenone) causing deterioration smell and derived from citral by heating or with lapse of time in respective stages of manufacture, distribution, storage and the like of citral or citral-containing products and also is of a high safety without any influence on the original flavor or scent of final products.

We have made our earnest studies on flavor deterioration inhibiting activity of a wide variety of components derived from natural products centering on plants, and, as a result, have found out that flavor deterioration of foods and others, noticeably by light or else by heat, oxygen, etc. can be inhibited over a long period by using an extract of Ashitaba, avocado, common plantain, oriental senna, hawthorn, semi-fermented tea leaves or fermented tea leaves with water, a polar organic solvent or a mixture thereof. And further, we have studied in detail the generation of flavor deterioration of citral by heating, and, as a result, have found out that an extract of Ashitaba, avocado, common plantain, oriental senna, hawthorn, semi fermented tea leaves or fermented tea leaves with water, a polar organic solvent or a mixture thereof can show a remarkable inhibiting effect on the generation of p-cresol and p-methylacetophenone, which are substances causing a very strong deterioration smell of citral or citral-containing products, and we have completed this invention upon these findings. More specifically, this invention relates to a flavor deterioration inhibitor or an inhibitor for the generation of deterioration smell of citral or a citral-containing product, which comprises a solvent extract of Ashitaba, avocado, common plantain, oriental senna, hawthorn, semi-fermented tea leaves or fermented tea leaves (provided that there is excluded a flavor deterioration inhibitor for a coffee liquid extract comprising an extract of semi-fermented tea leaves or fermented tea leaves). The solvent extract is obtained by extraction with water, a polar organic solvent or a mixture thereof. This invention further relates to an oral composition wherein said flavor deterioration inhibitor is added at 1-500 ppm. And further, this invention relates to a method for inhibiting flavor deterioration which comprises incorporating said flavor deterioration inhibitor into an oral composition at 1-500 ppm. This invention also relates to a flavor comprising said flavor deterioration inhibitor at 0.005-5 % by weight. Moreover, this invention relates to a method for inhibiting flavor deterioration which comprises incorporating said flavor deterioration inhibitor into a flavor at 0.005-5 % by weight.

Furthermore, this invention relates to an inhibitor for the generation of deterioration smell of citral or a citral-containing product, which comprises an extract obtained by extracting Ashitaba, avocado, common plantain, oriental senna, hawthorn, semi-fermented tea leaves or fermented tea leaves with water, a polar organic solvent or a mixture thereof. And, this invention relates to an inhibitor for the generation of deterioration smell of citral or a citral-containing product wherein deterioration smell is derived from p-cresol and p-methylacetophenone. And further, this invention relates to an inhibitor for the generation of deterioration smell of a citral-containing product wherein said citral-containing product is citrus-series flavors. And, this invention relates to an inhibitor for the generation of deterioration smell of a citral-containing product wherein said citral-containing product is citrus-series drinks or citrus-series confectionery. And, this invention relates to an inhibitor for the generation of deterioration smell of a citral-containing product wherein said citral-containing product is cosmetics. And further, this invention relates to a method for inhibiting the generation of deterioration smell of citral or a citral-containing product which comprises incorporating said inhibitor for the generation of deterioration smell at 1-500 ppm. This invention also relates to citral or a citral-containingproduct comprising said inhibitor for the generation of deterioration smell added at 1-500 ppm.

This invention will be more fully explained below.

(1) Raw Materials

Ashitaba (scientific name: *Angelica Keiskei (Miq.) Koïdz.*) used in this invention is a perennial grass of *Umberiferae* which grows wild on the seashore in a mild district. It has been since ancient times used for foods and has now been noted to be a medicinal herb. In this invention, roots, stems, leaves, etc. of Ashitaba may be subjected to the extraction process as mentioned below, and it is particularly preferable to use the stems or leaves.

Avocado (scientific name: *Perrsea americana Mill*) used in this invention is an evergreen tree of *Lauraceae, Persea,* and its fruits are used mainly as uncooked food. In this invention, roots, stems (branches and trunks), leaves, etc. of avocado may be subjected to the extraction process as mentioned below, and it is particularly preferable touse fruits, especially pericarps,

Oriental senna (scientific name: *Cassia obtusifolia L*. or *C. tora L*.) used in this invention is an annual grass of *Fabaceae, Cassia*. Its seed is referred to as cassia seed which is used as crude drugs and also for drinking as health tea. In this invention, roots, stems, leaves, seeds, etc. of oriental senna as a raw material may be subjected to the extraction process as mentioned below, and it is particularly preferable to use seeds.

Common plantain (scientific name: *Plantago asiatica L*.) used in this invention is a perennial grass of *Plantaginales.* Its young leaves are used for foods and also for drinks as common plantain tea. Its whole grass is referred to as plantago herb, while its seed is referred to as plantago seed. Both are used as crude drugs. In this invention, roots, stems, leaves, seeds, etc. of common plantain as a raw material may be subjected to the extraction process as mentioned below, and it is particularly preferable to use seeds or leaves

Hawthorn (scientific name: *Crataegus cuneata Sieb. et Zucc.*) used in this invention is a deciduous shrunk of *Rosaceae.* Its fruits are used for foods, and are also utilized as Chinese medicines. In this invention, roots, stems (branches and trunks), leaves, fruits etc. of hawthorn as a raw material may be subjected to the extraction process as mentioned below, and it is particularly preferable to use fruits.

Fermented tea leaves used in this invention are obtained from tea (scientific name: *Camellia sinensis var. sinensis* or *Camellia sinensis var. assamica*) by withering and rolling of raw leaves and then subjecting to complete fermentation with intrinsic oxidase. Examples of the fermented tea leaves may include tea leaves of black tea or compressed black tea, and it is preferable to use leaves of black tea.

Semi-fermented tea leaves used in this invention are obtained from tea (scientific name: *Camellia sinensis var. sinensis* or *Camellia sinensis var. assamica*) by fermenting (oxidizing) catechins etc. in raw leaves at 30-70 % with intrinsic oxidase (polyphenoloxidase). Examples of the semi-fermented tea leaves may include tea leaves of oolong tea or pouchung tea, and it is preferable to use leaves of oolong tea.

(2) Extraction process

i) Solvent

The solvent to be used for extraction process is water or a polar organic solvent and the organic solvent may be hydrous.

The polar organic solvent may include alcohols, acetone, ethyl acetate, etc. From the standpoints of safety to human body and handling, water or an aliphatic alcohol of 2-4 carbon atoms such as ethanol, propanol or butanol is particularly desirable. Especially, water, ethanol or a mixture thereof is desirable.

An amount of the solvent to be used for extraction may be optionally selected and, in general, 2-100 parts by weight of the solvent may be used per one part by weight of the above raw material.

Also, defatting treatment with a non-polar organic solvent such as hexane etc. may be previously applied as pretreatment for extraction to prevent extraction of too much lipid by subsequent extraction process. Also, this defatting treatment may eventually accomplish purification such as deodorization etc. And, steam distillation may be applied for deodorization prior to the extraction.

ii) Procedures for extraction process

Various procedures for extraction process may be employed depending on a kind, amount or the like of the solvent For instance, said raw material may be ground and placed in the solvent to accomplish extraction according to a dipping method or a method of heating under reflux. In case of the dipping method, any condition of heating, room temperature or cooling may be applied.

Incidentally, an extract solution may be obtained by removing solid materials insoluble in the solvent, and various means for separating solid from liquid such as centrifugation, filtration, compression, etc. may be applied as a method for removing solid materials.

The resulting extract solution may be used as such for a flavor deterioration inhibitor or an inhibitor for the generation of deterioration smell, but it may be used after appropriately diluting with a liquid diluent such as water, ethanol, glycerol, triethyl citrate, dipropylene glycol, propylene glycol, etc. And, there may be also added dextrin, sucrose, pectin, chitin, etc. They may be further concentrated to pasty extract, or subjected to treatment such as freeze-drying or drying under heating for use as powder.

There may be also used the product obtained after extracting by supercritical extraction, fractionating or deodorizing.

iii) Purification

The extract obtained according to the above procedure may be used as a flavor deterioration inhibitor or an inhibitor for the generation of deterioration smell by blending as such with an oral composition or a citral-containing product, and further purification process such as decoloration or deodorization may be applied. For purification process may be used active carbon, synthetic resin adsorbent comprising porous styrene-divinylbenzene copolymers and the like. As the synthetic resin adsorbent for purification, there may be used, for example, "DIAION HP-20 (registered trademark) manufactured by Mitubishi Chemical Corporation, "AMBERLITE XAD-2 (registered trademark)" manufactured by Organo Corporation, etc.

(3) Preparation of a flavor deterioration inhibitor and an inhibitor for the generation of deterioration smell.

A flavor deterioration inhibitor and an inhibitor for the generation of deterioration smell can be prepared by using the extract obtained above as a raw material, for example, as mentioned below.

Generally, various ingredients may be combined and dissolved in a (mixed) solvent of, for example, water, an alcohol, glycerol, propylene glycol and the like in suitable concentrations (Specifically stated, a mixed solvent of water/ ethanol, water/ethanol/glycerol, water/glycerol, etc.) to form a liquid preparation. Alternatively, fillers (dextrin etc.) may be added to each solution and then spray-dried to form a powdery preparation, and there may be used various dosage forms correspondingly to any intended use.

(4) Dosage regimen

A flavor deterioration inhibitor of this invention may be suitably incorporated in processing stage of oral compositions. An amount to be incorporated may somewhat vary depending on a concentration of the inhibitor or a type or flavor-threshold of the flavor component contained in an oral composition, and, generally, an added amount at 1-500 ppm (in terms of a solid ingredient of extract) may be suitable for drinks, foods or oral care products such as dentifrices or mouthwash. From the standpoint of addition of the inhibitor within a threshold range that would not influence on the original flavor of foods, oral care products, etc., 1-200 ppm is preferable, particularly preferable is 1-100 ppm. On the other hand, where the flavor deterioration inhibitor or this invention is to be used for flavor, it is suitable at 0.005-5 % by weight, and, from the standpoint of addition of the inhibitor within a threshold range that would not influence on the original flavor, 0.005-2 % by weight is preferable and particularly preferable is 0.01-1 % by weight.

Where one or more of other known flavor deterioration inhibitors may be used together, a mixing ratio is not particularly critical. An amount of the combined inhibitors to be added may vary depending on a purity of the component of the inhibitor to be used or a type of the subject product to which the inhibitor is added, but 1-500 ppm is suitable and particularly preferable is 1-100 ppm for drinks or foods or oral care products such as dentifrices or mouthwash. On the other hand, where the flavor deterioration inhibitor of this invention is to be used for flavor, it is suitable at 0.005-5 % by weight, and, from the standpoint of addition within a threshold range that would not influence on the original flavor, 0.005-2 % by weight is preferable and particularly preferable is 0.01-1 % by weight.

And, the flavor deterioration inhibitor of this invention may be used together with an antioxidant commonly employed such as L-ascorbic acid, a green tea extract, rutin, etc. and the antioxidants to be used together is not particularly critical. An amount of the mixed inhibitors to be added may vary depending on a purity of the component of the inhibitor to be used or a type of the subject product to which the inhibitor is added, but 1-500 ppm is suitable and particularly preferable is 1-100 ppm for drinks or foods or oral care products such as dentifrices or mouthwash. On the other hand, it is suitable for flavor at 0.005-2 % by weight, and particularly preferable is 0.01-1 % by weight.

The oral compositions or flavors to which the flavor deterioration inhibitor of this invention is applied may be exemplified as recited below.

Examples of drinks may include coffee, black tea, soft drink, lactic acid bacteria drink, non-fruit juice drink, fruit juice drink, nutrient drink, etc.

Examples of confectioneries may include jelly, pudding, bavaroise, candy, biscuit, cookie, chocolate, cake, etc.

Examples of fried foods may include instant (fried) noodle, deep-fried soybean curd (thin slice of deep-fried soybean curd, block of deep-fried soybean curd, deep-fried soy been curd containing various vegetable bits), deep-fried boiled fish paste, tempura, fried foods, snacks (potato chips, fried rice crackers, fried dough cake, doughnut, prepared frozen foods (frozen croquette, deep-fried prawn, etc.) etc.

Examples-of oils and fats and processed oil and fat food products may include edible oils and fats (animal oils and fats and vegetable oils and fats), margarine, shortening, mayonnaise, dressing, hard butter, etc.

Examples of products using as a main raw material milk, dairy products, etc. may include raw milk, milk, recombined milk, etc. as milk; and cream, butter, butter oil, concentrated whey, cheese, ice cream, yogurt, condensed milk, milk powder, concentrated milk, etc. as dairy products.

Examples of oral hygienic agents may include dentifrice, gargle, mouth refrigerant, mouthwash, etc.

Examples of flavor may include flavor raw materials (essential oil, essence, concrete, absolute, extract, oleoresin, resinoid, recovered flavor, carbon dioxide gas-extracted essential oil, synthetic aromatic), flavor compositions containing them, etc.

The products to which the inhibitor for the generation of citral deterioration smell or the method for inhibiting the generation of deterioration smell according to this invention may be applied are not particularly critical, and, besides citrus-series flavors or citrus-series fragrances , the products may include citrus-series drinks such as carbonated drink, juice, fruit juice drink, milk drink, tea drink, etc.; extremets froids containing citral, such as yogurt, jelly, ice cream, etc.; confectioneries such as candy, glucose syrup, gum, etc.; food materials; food additives such as citrus-series flavors etc.; various citrus-flavored dressings, frequently displayed in the show windows. In addition to foods, there may be mentioned citral-containing fragrances and cosmetics such as perfume, toiletries, mouthwash, dentifrice, detergent, soap, shampoo, rinse, bath medicine, aromatic, etc.

The inhibitor for the generation of citral deterioration smell according to this invention may be suitably incorporated in any processing stages of citral-containing products. An amount thereof to be incorporatedmay vary depending on purity of the component of the inhibitor for the generation of deterioration smell to be used or a type of the subject to which the inhibitor is incorporated, and an amount to be incorporated is generally suitable at 1-500 ppm. Where the subject product is food, 1-200 ppm, particularly 1-100 ppm is preferable from the standpoint that it would hardly influence on the original flavor.

And, where two or more of the inhibitors for the generation of citral deterioration smell are used together, a mixed ratio is not particularly critical. An amount of the mixed inhibitors to be incorporated may vary depending on purity of the component of the inhibitor to be used or a type of the subject product to which the inhibitor is incorporated, and it is generally suitable at 1-500 ppm and particularly 1-100 ppm is preferable.

Brief Description of the Drawings

Fig. 1 is an ultraviolet spectrum of the extract of leaves of Ashitaba/water in Extraction Example 1.

Fig. 2 is an ultraviolet spectrum of the extract of leaves of Ashitaba/50 % by weight ethanol in Extraction Example 2.

Fig. 3 is an ultraviolet spectrum of the extract of stems of Ashitaba/50 % by weight ethanol in Extraction Example 3.

Fig. 4 is an ultraviolet spectrum of the extract of leaves of Ashitaba/95 % by weight ethanol in Extraction Example 4.

Fig. 5 is an ultraviolet spectrum of the extract of leaves of Ashitaba/HP-20 purified product in Extraction Example 5.

Fig. 6 is an ultraviolet spectrum of the extract of pericarps of avocado/water in Extraction Example 6.

Fig. 7 is an ultraviolet spectrum of the extract of pericarps of avocado/50 % by weight ethanol in Extraction Example 7.

Fig. 8 is an ultraviolet spectrum of the extract of seeds of avocado/50 % by weight ethanol in Extraction Example 8.

Fig. 9 is an ultraviolet spectrum of the extract of pericarps of avocado/95 % by weight ethanol in Extraction Example 9.

Fig. 10 is an ultraviolet spectrum of the extract of pericarps of avocado/HP-20 purified product in Extraction Example 10.

Fig. 11 is an ultraviolet spectrum of the extract of oriental senna with water in Extraction Example 11.

Fig. 12 is an ultraviolet spectrum of the extract of oriental senna with 50 % by weight ethanol in Extraction Example 12.

Fig. 13 is an ultraviolet spectrum of the extract of oriental senna with 95 % by weight ethanol in Extraction Example 13.

Fig. 14 is an ultraviolet spectrum of the purified product of oriental senna with HP-20 in Extraction Example 14.

Fig. 15 is an ultraviolet spectrum of the extract of seeds of common plantain with 25 % by weight ethanol in Extraction Example 15.

Fig. 16 is an ultraviolet spectrum of the extract of leaves of common plantain with 50 % by weight ethanol in Extraction Example 16.

Fig. 17 is an ultraviolet spectrum of the extract of seeds of common plantain with 95 % by weight ethanol in Extraction Example 17.

Fig. 18 is an ultraviolet spectrum of the purified product of leaves of common plantain with HP-20 in Extraction Example 18.

Fig. 19 is an ultraviolet spectrum of the extract of hawthorn with water in Extraction Example 19.

Fig. 20 is an ultraviolet spectrum of the extract of hawthorn with 50 % by weight ethanol in Extraction Example 20.

Fig. 21 is an ultraviolet spectrum of the extract of hawthorn with 95 % by weight ethanol in Extraction Example 21.

Fig. 22 is an ultraviolet spectrum of the purified product of hawthorn with HP-20 in Extraction Example 22.

Fig. 23 is an ultraviolet spectrum of the extract of black tea leaves with water in Extraction Example 23.

Fig. 24 is an ultraviolet spectrum of the extract of black tea leaves with 50 % by weight ethanol in Extraction Example 24.

Fig. 25 is an ultraviolet spectrum of the extract of black tea leaves with 95 % by weight ethanol in Extraction Example 25.

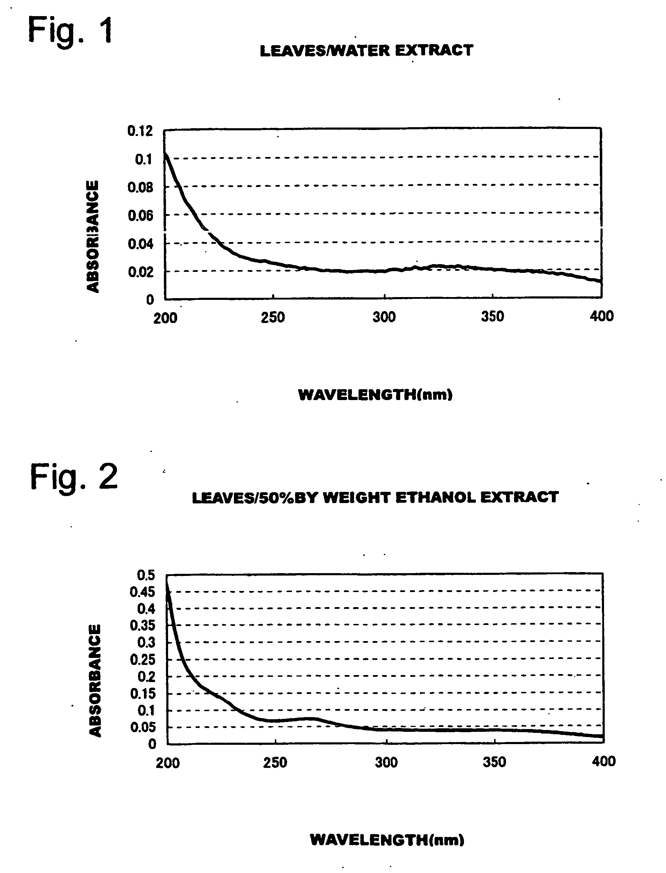

Fig. 2b is an ultraviolet spectrum of the extract of oolong tea leaves with water in Extraction Example 26.

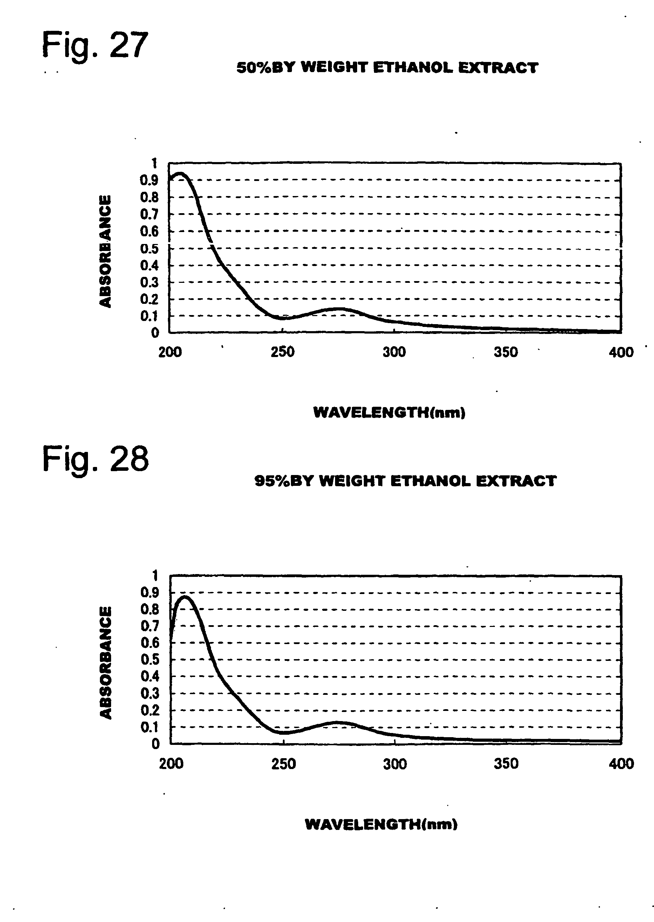

Fig. 27 is an ultraviolet spectrum of the extract of oolong tea leaves with 50 % by weight ethanol in Extraction Example 27.
Fig. 28 is an ultraviolet spectrum of the extract of oolong tea leaves with 95 % by weight ethanol in Extraction Example 28.

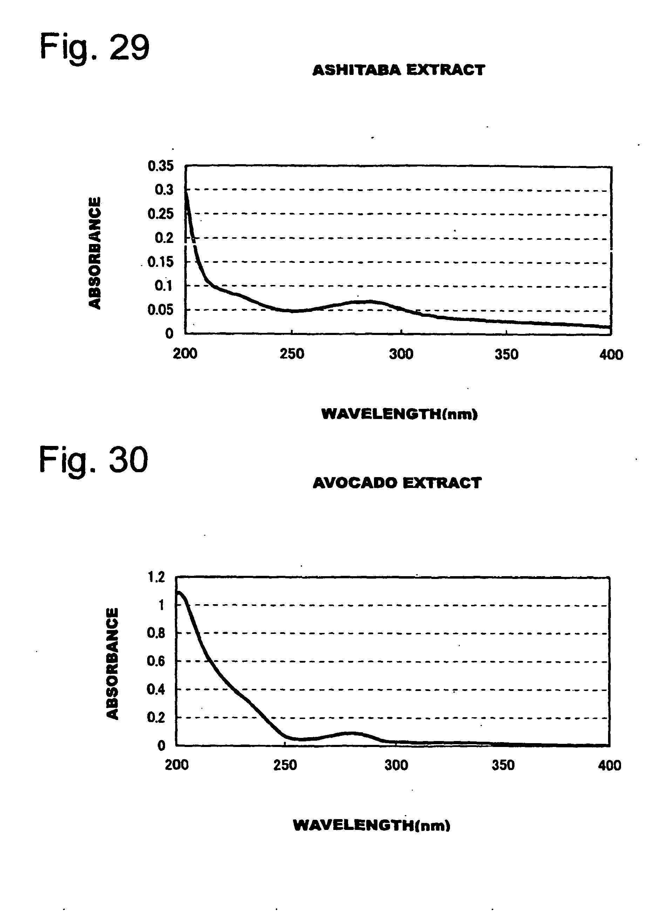

Fig. 29 is an ultraviolet spectrum of the extract of Ashitaba in Extraction Example 29.
Fig. 30 is an ultraviolet spectrum of the extract of avocado in Extraction Example 30.

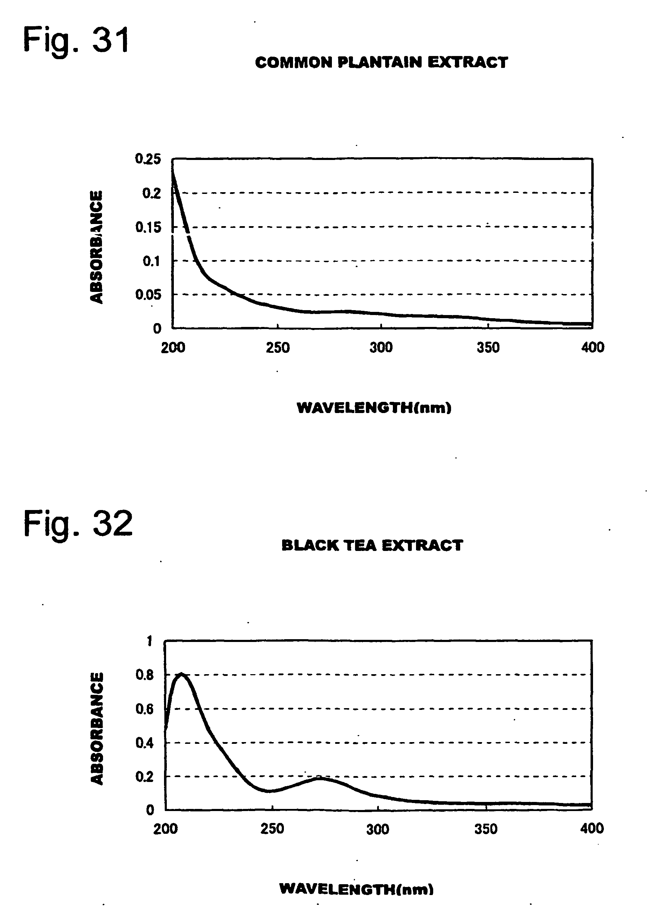

Fig. 31 is an ultraviolet spectrum of the extract of common plantain in Extraction Example 31.

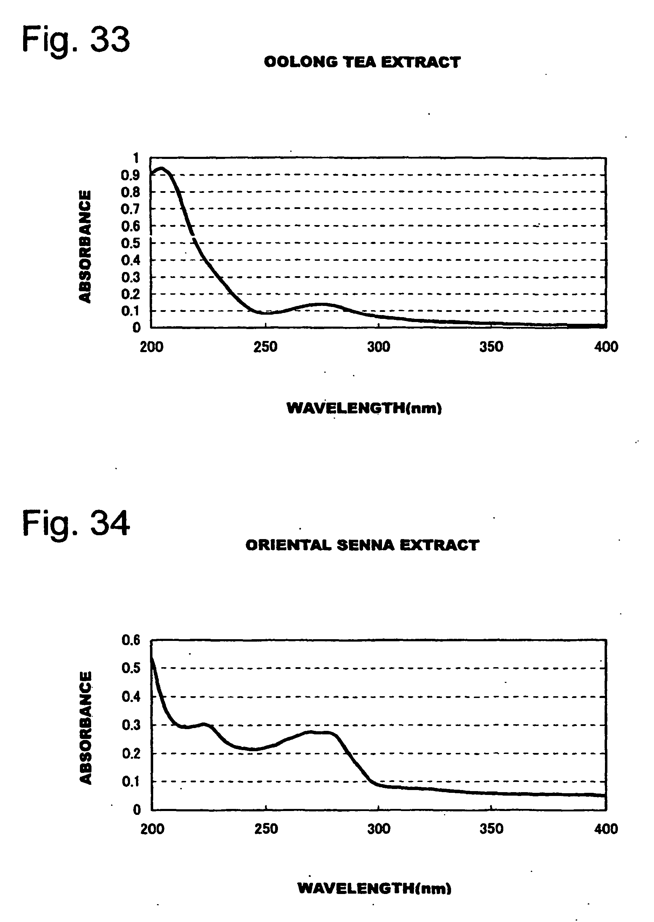

Fig. 32 is an ultraviolet spectrum of the extract of black tea in Extraction Example 32.
Fig. 33 is an ultraviolet spectrum of the extract of oolong tea in Extraction Example 33.
Fig. 34 is an ultraviolet spectrum of the extract of oriental senna in Extraction Example 34.

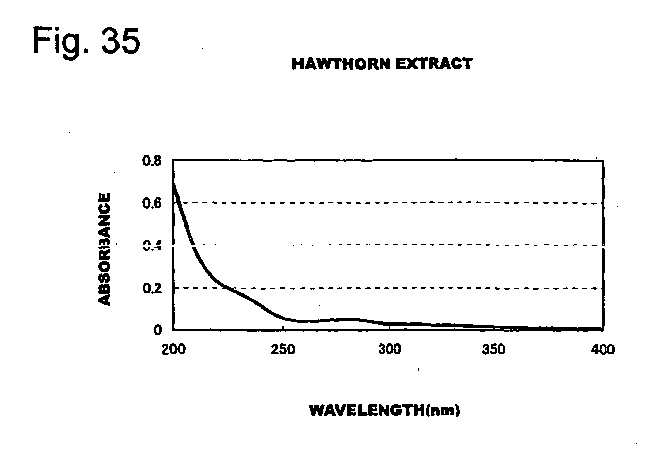

Fig. 35 is an ultraviolet spectrum of the extract of hawthorn in Extraction Example 35.

Best Mode for Carrying Out the Invention

This invention will be more fully explained on the basis of examples as described below, but this invention is not to be limited to these examples.

1. Ashitaba

Extraction Example

[Extraction Example 1] Leaves/extraction with water

Extraction was carried out by adding 500 g of water to 50 g of dried leaves of Ashitaba and heating under reflux for one hour.
After removing insoluble by filtration, the filtrate was concentrated under reduced pressure and freeze-dried to give 10.1 g of a pale yellow powder (hereinafter referred to as "leaves/water extract"). This extract had the following physical properties:

   a) An ultraviolet spectrum is as shown in Fig. 1 (measurement concentration: 10 ppm, dilution solvent: distilled water). λmax: 334 nm, 246 nm
   b) Solubility: Readily soluble in water, soluble in a 50 % by weight aqueous solution of ethanol, insoluble in ethanol.

[Extraction Example 2] Leaves/extraction with 50 % by weight aqueous solution of ethanol

Extraction was carried out by adding 500 g of a 50 % by weight aqueous solution of ethanol to 50 g of dried leaves of Ashitaba and heating under reflux for one hour.
After removing insoluble by filtration, the filtrate was concentrated under reduced pressure and freeze-dried to give 20.0 g of a pale brown powder (hereinafter referred to as "leaves/50 % by weight ethanol extract"). This extract had the following physical properties:

   a) An ultraviolet spectrum is as shown in Fig. 2 (measurement concentration 10 ppm, dilution solvent: 50% by weight aqueous solution of ethanol).
   λmax: 267 nm
   b) Solubility: Soluble in water, readily soluble in a 50 % by weight aqueous solution of ethanol, insoluble in ethanol.

[Extraction Example 3] Stems/extraction with 50 % by weight aqueous solution of ethanol

Extraction was carried out by adding 500 g of a 50 % by weight aqueous solution of ethanol to 50 g of dried stems of Ashitaba and heating under reflux for one hour.
After removing insoluble by filtration, the filtrate was concentrated under reduced pressure and freeze-dried to give 8.2 g of a brown powder (hereinafter referred to as "stems/50 % by weight ethanol extract"). This extract had the following physical properties:

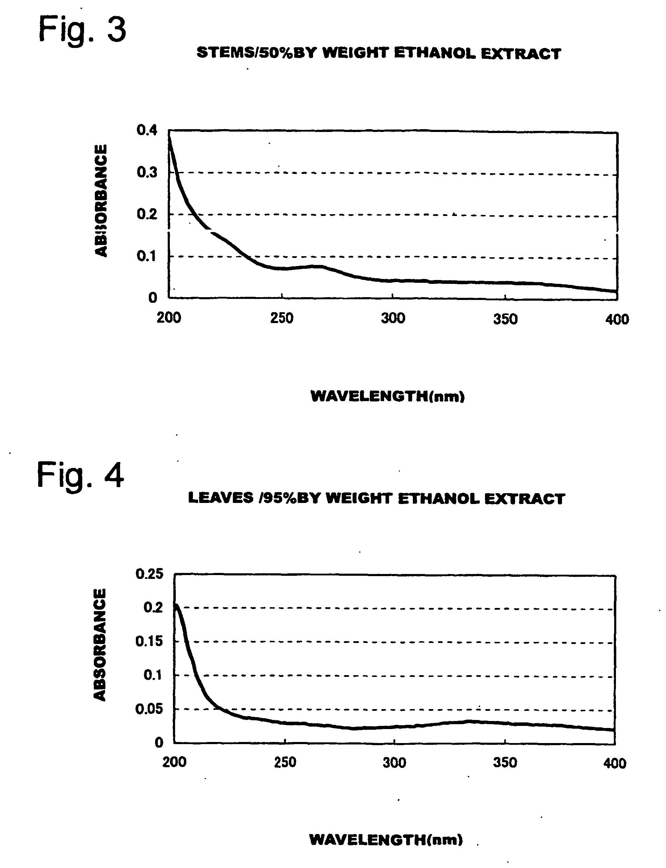

   a) An ultraviolet spectrum is as shown in Fig. 3 (measurement concentration: 10 ppm, dilution solvent: 50 % by weight aqueous solution of ethanol)

λmax: 265 nm

b) Solubility: Soluble in water, readily soluble in a 50 % by weight aqueous solution of ethanol, insoluble in ethanol.

[Extraction Example 4] Leaves/extraction with 95 % by weight aqueous solution of ethanol

Extraction was carried out by adding 500 g of a 95 % by weight aqueous solution of ethanol to 50 g of dried leaves of Ashitaba and heating under reflux for one hour.

After removing insoluble by filtration, the filtrate was concentrated under reduced pressure and freeze-dried to give 5.8 g of a green powder (hereinafter referred to as "leaves/95 % by weight ethanol extract"). This extract had the following physical properties:

a) An ultraviolet spectrum is as shown in Fig. 4 (measurement concentration: 10 ppm, dilution solvent: 95 % by weight aqueous solution of ethanol)

λmax: 334 nm, 201 nm

b) Solubility: Insoluble in water, soluble in a 50 % by weight aqueous solution of ethanol, readily soluble in ethanol.

[Extraction Example 5] Leaves/HP-20 purified product

Extraction was carried out by adding 1000 g of a 50 % by weight aqueous solution of ethanol to 100 g of dried leaves of Ashitaba and heating under reflux for one hour.

After removing insoluble by filtration, the filtrate was concentrated under reduced pressure to 100 g.

To 25 g of the concentrate was added 75 g of water and adsorbed onto 100 ml of a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 4.3 g of a brown powder (hereinafter referred to as "leaves/HP-20 purified product"). This extract had the following physical properties:

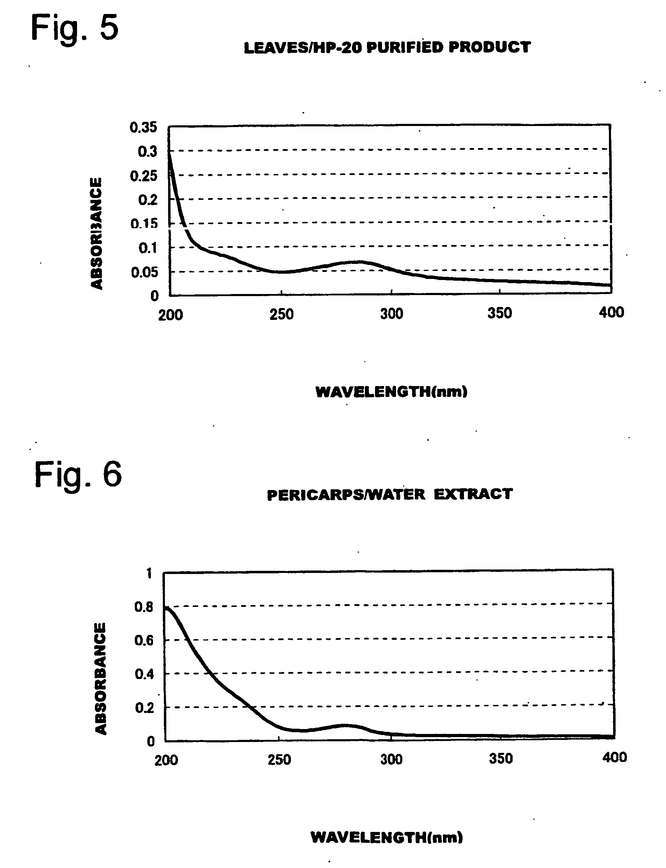

a) An ultraviolet spectrum is as shown in Fig. 5 (measurement concentration: 10 ppm, dilution solvent: 50 % by weight aqueous solution of ethanol).

λmax: 286 nm

b) Solubility: Soluble in water, readily soluble in a 50 % by weight aqueous solution of ethanol, insoluble in ethanol.

Test Example

In Test example were used as reagents the following compound.

L-Ascorbic acid:

L(+)-Ascorbic acid manufactured by Nacalai Tesque, Inc. was used. Then, the resulting Ashitaba extract was evaluated for inhibiting effect on flavor deterioration.

[Test Example 1]

A 65 % by weight aqueous solution of ethanol containing 35 g of sugar, 0.35 g of citric acid and 1 g of citral, which is a characteristic flavor component, particularly, to lemon, was prepared (a total volume of 1000 ml). The solution without any flavor deterioration inhibitor and the solution containing the flavor deterioration inhibitor at 200 ppm were placed into separate transparent glass vessels, respectively, and subjected to irradiation of light using a light stability tester ("Type LSR-300" manufactured by Tokyo Rikakikai Co.,Ltd.). Irradiation condition was adjusted to 4,000 lux with white luminescence lumps 40W x 12 and 360nm near ultraviolet lumps 40W x 3 at near ultraviolet ray intensity of 0.3 mW/cm$^2$ (in the center of the tester) and at a temperature of 10° C for 72 hours. Citral content after light irradiation was determined by high performance liquid chromatography (HPLC).

The results are shown in Table 1. Determination conditions are as shown below.

(Determination conditions)

Instrument: "HITACHI D-7000 HPLC system" manufactured by Hitachi Ltd.

Column: "COSMOSIL (Registered trademark) 5C18, 4.6 mm x 250 mm" manufactured by Nacalai Tesque, Inc. (column temperature of 40° C)

Eluent: A=acetonitrile, B=water

| Gradient conditions: | 0 min.→ | 25 min. |
|---|---|---|
| A=acetonitrile | 10% | 90% |
| B=water | 90% | 10% |

Flow rate: 1 ml/min.
Detection wavelength: 254 nm
Citral residual rate (%) in Table 1 was calculated according to the following equation:

$$\texttt{Citral residual rate (\%)=C/D x 100}$$

(wherein, C: Citral content of the sample after light irradiation D: Citral content of the sample before light Irradiation)

Table 1

| Test for citral residual amount | |
|---|---|
| Flavor deterioration inhibitor (Added amount: 200 ppm) | Citral residual rate (%) |
| Inhibitor-free product | 30 |
| L-Ascorbic acid | 31 |
| Product added with leaves/water extract | 68 |
| Product added with leaves/50 % by weight ethanol extract | 73 |
| Product added with stems/50 % by weight ethanol extract | 76 |
| Product added with leaves/95 % by weight ethanol extract | 71 |
| Product added with leaves/HP-20 purified product | 70 |

As shown in Table 1, products with a flavor deterioration inhibitor comprising Ashitaba extract strongly inhibited decrease in citral by light irradiation, as compared with inhibitor-free product and product added with L-ascorbic acid.

Then, flavor inhibiting effect was evaluated by adding the Ashitaba extract obtained by the above extraction to various foods.

[Test Example 2] (Yogurt drink)

A mixture of 94 g of milk and 6 g of skim milk powder was sterilized (90-95° C, for 5 minutes). After cooling to 48° C, a starter (lactic acid bacteria) was inoculated. This was placed into a glass vessel to effect fermentation (40° C, for 4 hours, pH 4.5). After cooling, it was stored at 5° C for use as yogurt base. On the other hand, a sugar solution was used which was prepared by mixing 20 g of white sugar, 1 g of pectin and 79 g of water, heating at 90-95° C for 5 minutes and hot-packing. A mixture of 60 g of the above yogurt base, 40 g of the above sugar solution and 0.1 g of flavor was processed by a homomixer and then a homogenizer. The product without flavor deterioration inhibitor and the product with flavor deterioration inhibitor at 10 ppm were packed into translucent plastic vessels, respectively. These vessels were individually placed in a light stability tester and irradiated with fluorescent light (6,000 lux, 10° C for 5 hours), and then sensory test was carried out by selecting a panel consisting of skilled 10 experts. And, yogurt drinks without flavor deterioration inhibitor and irradiation of fluorescent light were used in this case as a control-with no flavor change, and degree of flavor change (deterioration) was evaluated. The results are given in Table 2. In Table 2, score for evaluation is an average of each panel marked according to the following score standard.
And, the unpalatable taste or off odor as defined in the score standard is referred to, especially, "metallic odor", "pickles odor" or "oil deterioration odor".

(Score standard)

Intense unpalatable taste or off odor: 4 points
Flavor considerably changed: 3 points
Flavor changed: 2 points
Flavor somewhat changed: 1 point
Flavor unchanged: 0 point

Table 2

| Yogurt Drink | |
| --- | --- |
| Flavor deterioration inhibitor (Added amount: 10 ppm) | Average of sensory evaluation |
| Inhibitor-free product | 3.6 |
| L-Ascorbic acid | 3.3 |
| Product added with leaves/water extract | 1.2 |
| Product added with leaves/50% by weight ethanol extract | 1.2 |
| Product added with stems/50 % by weight ethanol extract | 1.0 |
| Product added with leaves / 95 % by weight ethanol extract | 1.3 |
| Product added with leaves/HP-20 purified product | 0.6 |

As shown in Table 2, it has been found that drinks with a flavor deterioration inhibitor comprising Ashitaba extract have a higher inhibiting effect on flavor deterioration, as compared with inhibitor-free drinks and drinks with L-ascorbic acid.

[Test Example 3] (Lemon-flavored drink)

10 g of granulated sugar, 0.1 g of citric acid and 0.1 g of lemon flavor were made up to a total amount of 100g with water. The drink without flavor deterioration inhibitor and the drink with flavor deterioration inhibitor at 5 ppm were packed into glass vessels, respectively. These vessels were sterilized at 70° C x 10 minutes. These vessels were irradiated in a light stability tester with light (15,000 lux, 10° C, for 3 days), and then sensory test was carried out by selecting a panel consisting of skilled 10 experts. And, lemon-flavored drink without flavor deterioration inhibitor and irradiation of fluorescent light was used as a control in this case, and degree of flavor change (deterioration) was evaluated. The results are given in Table 3. In Table 3, score for evaluation is an average of each panel as marked according to the same score standard as in Test Example 2. And, the unpalatable taste or off odor as defined in the score standard is referred to especially "vinyl odor" or "green odor".

Table 3

| Lemon-flavored Drink | |
| --- | --- |
| Flavor deterioration inhibitor (Added amount: 5 ppm) | Average of sensory evaluation |
| Inhibitor-free product | 3.5 |
| L-Ascorbic acid | 3.4 |
| Product added with leaves/water extract | 1.7 |
| Product added with leaves/50 % by weight ethanol extract | 1.3 |
| Product added with stems/50 % by weight ethanol extract | 1.0 |
| Product added with leaves/95 % by weight ethanol extract | 1.2 |
| Product added with leaves/HP-20 purified product | 0.9 |

As shown in Table 3, it has been found that drinks added with a flavor deterioration inhibitor comprising Ashitaba extract have a higher inhibiting effect on flavor deterioration, as compared with inhibitor-free drinks and drinks added with L-ascorbic acid.

[Test Example 4] (Lactic acid bacteria drink)

Lactic acid bacteria drink was prepared by diluting fermented milk stock (a total solid matter content of 54 %, a fat-free dry matter content of 4 %) to five times at a weight ratio with distilled water. 100 g each of the drink without flavor deterioration inhibitor and the drink with flavor deterioration inhibitor at 10 ppm was packed into glass vessels, respectively. These vessels were sterilized at 70° C for 10 minutes. The vessels were irradiated with light (15,000 lux, 10° C, for 12 hours) in a light stability tester, and then sensory test was carried out by selecting a panel consisting of skilled 10 experts. And, lactic acid bacteria drink without flavor deterioration inhibitor and not irradiated with fluorescent light was used as a control in this case, and degree of flavor change (deterioration) was evaluated. The results are given in Table 4. In Table 4, score for evaluation is an average of each panel as marked according to the same score standard as in Test Example 2. And, the unpalatable taste or off odor as defined in the score standard is referred to, especially, "pickles odor" or "metallic odor".

Table 4

| Lactic acid bacteria drink | |
| --- | --- |
| Flavor deterioration inhibitor (Added amount: 10 ppm) | Average of sensory evaluation |
| Inhibitor-free product | 3.9 |
| L-Ascorbic acid | 3.5 |
| Product added with leaves/water extract | 1.1 |
| Product added with leaves/50 % by weight ethanol extract | 1.2 |
| Product added with stems/50 % by weight ethanol extract | 0.9 |
| Product added with leaves/95 % by weight ethanol extract | 1.1 |
| Product added with leaves/HP-20 purified product | 0.7 |

As shown in Table 4, it has been found that drinks with flavor deterioration inhibitor comprising Ashitaba extract have a higher inhibiting effect on flavor deterioration, as compared with inhibitor-free drinks and drinks added with L-ascorbic acid.

[Test Example 5] (100 % Orange drink)

With 40 g of Valencia orange fivefold concentrated juice was admixed 160 g of distilled water. The mixture without any flavor deterioration inhibitor and the mixture to which a flavor deterioration inhibitor was added at 20 ppm were packed into cans, respectively. These cans were sterilized at 70° C for 10 minutes and stored in a thermostat at 40° C for 2 weeks, respectively. Then, sensory test was carried out by selecting a panel consisting of skilled 10 experts. And, a 100 orange drink without any flavor deterioration inhibitor was used as a control with unchanged flavor in this case after stored at 5° C for 2 weeks, and degree of flavor change (deterioration) was evaluated. The results are given in Table 5. In Table 5, score for evaluation is an average of each panel as marked according to the same score standard as in Test Example 2. And, the unpalatable taste or off odor as defined in the score standard is referred to, especially, "potato-like odor" or "spice-like odor".

Table 5

| 100 % Orange drink | |
| --- | --- |
| Flavor deterioration inhibitor (Added amount: 20 ppm) | Average of sensory Evaluation |
| Inhibitor-free product | 3.2 |
| L-Ascorbic acid | 3.1 |
| Product added with leaves/water extract | 1.5 |
| Product added with leaves/50 % by weight ethanol extract | 1.1 |
| Product added with stems/50 % by weight ethanol extract | 1.0 |
| Product added with leaves/95 % by weight ethanol extract | 1.2 |

(continued)

| 100 % Orange drink | |
| --- | --- |
| Flavor deterioration inhibitor (Added amount: 20 ppm) | Average of sensory Evaluation |
| Product added with leaves/HP-20 purified product | 0.8 |

As shown in Table 5, it has been found that drinks added with a flavor deterioration inhibitor comprising Ashitaba extract have a higher inhibiting effect on flavor deterioration, as compared with inhibitor-free drinks and drinks added with L-ascorbic acid.

Example

[Example 1] (Oral cleaning rinse)

Oral cleaning rinse was prepared by blending in the following formulation amounts.

| | |
| --- | --- |
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| 1 % by weight aqueous solution of the leaves/water extract in a 50 %-by weight aqueous solution of ethanol | 0.1 g |
| Purified water | 72.1 g |

[Example 2] Margarine

A mixture of 55 g of shortening, 15 g of corn oil, 0.1 g of a 30 % β-carotene solution, 0.2 g of lecithin and 0.3 g of an emulsifier was sterilized by warming in hot water at 80° C for 10 minutes. On the other hand, a mixture of 27. 9 g of water, 0.5 g of sodium chloride, 1 g of skim milk powder and 0.1 g of a 1 % by weight solution of the Ashitaba leaves /water extract in a 50 % by weight aqueous solution of ethanol was heated up to 85° C in a hot water bath. The corn oil mixture and skim milk powder mixture thus obtained were cooled to 50-60°C, respectively, and then both were admixed and stirred at 1, 500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 3] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the Ashitaba stems/50 % by weight ethanol extract in a 50 % by weight aqueous solution of ethanol to finish vanilla extract of this invention.

[Example 4] (Apple flavor)

Apple flavor was prepared according to the following formulation.

| | |
| --- | --- |
| Isoamyl formate | 100 g |
| Isoamyl acetate | 100 g |
| Isoamyl hexanoate | 60 g |
| Isoamyl octanoate | 10 g |
| Geraniol | 10 g |
| Ethanol | 430 g |

(continued)

| | |
|---|---|
| Distilled water | 290 g |

To 100 g of the above apple flavor was added 2 g of a 1 % by weight solution of the Ashitaba leaves/95 % by weight ethanol extract in a 50 % by weight aqueous solution of ethanol to complete apple flavor of this invention.

[Example 5] (Grape flavor)

Grape flavor was prepared according to the following formulation.

| | |
|---|---|
| Isoamyl isovalerate | 10 g |
| Cinnamyl alcohol | 5 g |
| Ethyl acetate | 60 g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight solution of the Ashitaba leaves/HP-20 purified product in a 50 % by weight aqueous solution of ethanol to complete grape flavor of this invention.

2. Avocado

Extraction Example

[Extraction Example 6] Pericarps/extraction with water

Extraction was carried out by grinding 50 g of dried avocado pericarps, adding 500 g of water and heating under reflux for one hour.
After removing insoluble by filtration, the filtrate was concentrated under reduced pressure and freeze-dried to give 6.6 g of a reddish brown powder (hereinafter referred to as "pericarps/water extract"). This extract had the following physical properties:

    a) An ultraviolet spectrum is as shown in Fig. 6 (measurement concentration: 10 ppm, dilution solvent: distilled water)
    λmax: 279 nm
    b) Solubility: Readily soluble in water, soluble in a 50 % by weight aqueous solution of ethanol, insoluble in ethanol.

[Extraction Example 7] Pericarps/extraction with 50 % by weight aqueous solution of ethanol

Extraction was carried out by grinding 50 g of dried avocado pericarps, adding 500 g of a 50 % by weight aqueous solution of ethanol and heating under reflux for one hour.
After removing insoluble by filtration, the filtrate was concentrated under reduced pressure and freeze-dried to give 11.2 g of a reddish brown powder (hereinafter referred to as "pericarps/50 % by weight ethanol extract"). This extract had the following physical properties:

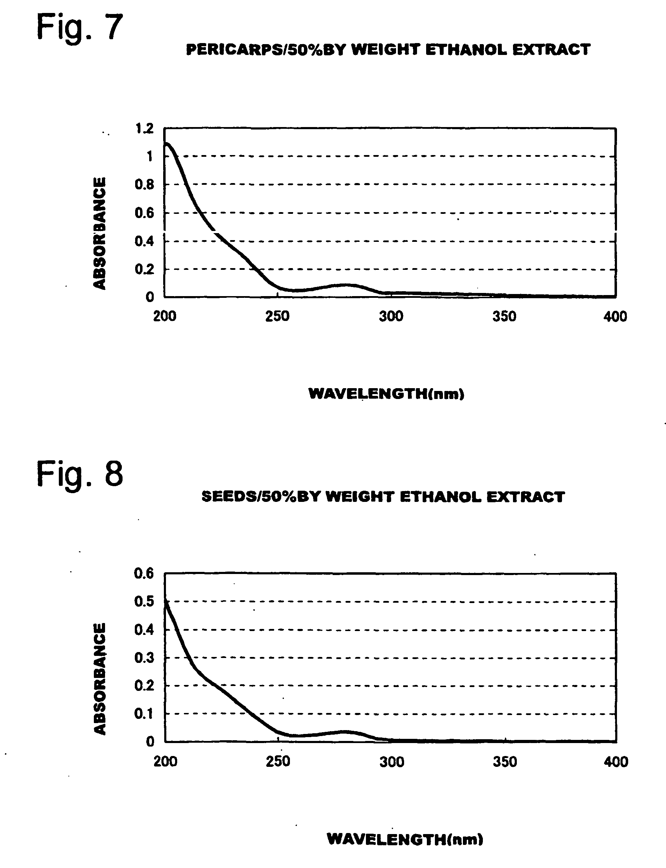

    a) An ultraviolet spectrum is as shown in Fig. 7 (measurement concentration: 10 ppm, dilution solvent: 50 % by weight aqueous solution of ethanol)
    λmax: 280 nm, 201 nm
    b) Solubility: Soluble in water, readily soluble in a 50 % by weight aqueous solution of ethanol, insoluble in ethanol.

[Extraction Example 8] Seeds/extraction with 50 % by weight aqueous solution of ethanol

Extraction was carried out by adding 500 g of a 50 % by weight aqueous solution of ethanol to 50 g of dried seeds of avocado and heating under reflux for one hour.

After removing insoluble by filtration, the filtrate was concentrated under reduced pressure and freeze-dried to give 2.3 g of a brown powder (hereinafter referred to as "seeds/50 % by weight ethanol extract"). This extract had the following physico-chemical properties:

> a) An ultraviolet spectrum is as shown in Fig. 8 (measurement concentration: 10 ppm, dilution solvent: 50 % by weight aqueous solution of ethanol)
> λmax: 278 nm
> b) Solubility: Soluble in water, readily soluble in a 50 % by weight aqueous solution of ethanol, insoluble in ethanol.

[Extraction Example 9] Pericarps/extraction with 95 % by weight aqueous solution of ethanol

Extraction was carried out by grinding 50 g of dried pericarps of avocado, adding 1000 g of a 95 % by weight aqueous solution of ethanol and heating under reflux for one hour.

After removing insoluble by filtration, the filtrate was concentrated under reduced pressure and freeze-dried to give 4.6 g of a reddish brown powder (hereinafter referred to as "pericarps/95 % by weight ethanol extract"). This extract had the following physical properties:

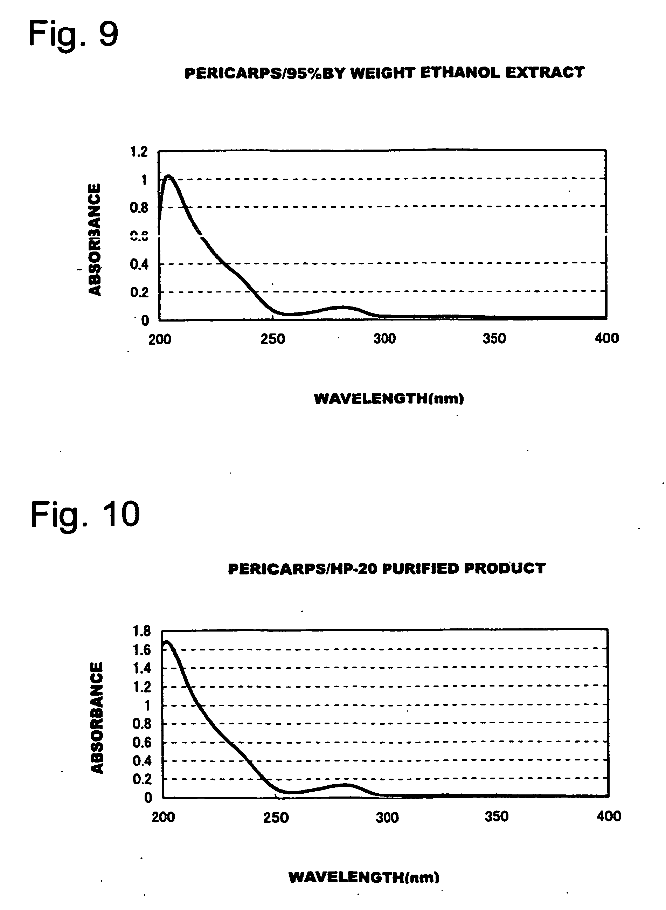

> a) An ultraviolet spectrum is as shown in Fig. 9 (measurement concentration: 10 ppm, dilution solvent: 95 % by weight aqueous solution of ethanol)
> λmax: 280 nm, 204 nm
> b) Solubility: Insoluble in water, Soluble in a 50 % by weight aqueous solution of ethanol, readily soluble in ethanol.

[Extraction Example 10] Pericarps/HP-20 purified product

Extraction was carried out by grinding 25 g of dried avocado pericarps, adding 1000 g of a 50 % by weight aqueous solution of ethanol and heating under reflux for one hour. After removing insoluble by filtration, the filtrate was concentrated under reduced pressure to 100 g.

To 100 g of the concentrated liquid was adsorbed onto 100 ml of a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 3.1 g of a reddish brown powder (hereinafter referred to as "pericarps/HP-20 purified product"). This extract had the following physical properties:

> a) An ultraviolet spectrum is as shown in Fig. 10 (measurement concentration: 10 ppm, dilution solvent: 50 % by weight aqueous solution of ethanol).
> λ max : 280 nm, 202 nm
> b) Solubility: Soluble in water, readily soluble in a 50 % by weight aqueous solution of ethanol, insoluble in ethanol.

Test Example

Then, the resulting avocado extract was evaluated for inhibiting effect on flavor deterioration.

[Test Example 6]

Inhibiting effect on flavor deterioration by the avocado extract was tested in the entirely same manner as in Test Example 1. The results are shown in Table 6.

Table 6

| Test for citral residual amount | |
| --- | --- |
| Flavor deterioration inhibitor (Added amount: 200 ppm) | Citral residual rate (%) |
| Inhibitor free product | 28 |
| L-Ascorbic acid | 30 |

(continued)

| Test for citral residual amount | |
|---|---|
| Flavor deterioration inhibitor (Added amount: 200 ppm) | Citral residual rate (%) |
| Product added with pericarps/water extract | 70 |
| Product added with pericarps/50 % by weight ethanol extract | 67 |
| Product added with seeds/50 % by weight ethanol extract | 53 |
| Product added with pericarps/95 % by weight ethanol extract | 64 |
| Product added with pericarps/HP-20 purified product | 75 |

As shown in Table 6, products added with a flavor deterioration inhibitor comprising avocado extract strongly inhibited decrease in citral by light irradiation, as compared with inhibitor-free product and product added with L-ascorbic acid.

Then, flavor inhibiting effect was evaluated by adding the avocado extract obtained by the above extraction to various foods.

[Test Example 7] (Yogurt drink)

Yogurt drink was prepared and inhibiting effect on flavor deterioration was evaluated in the completely same manner as in Test Example 2.

Table 7

| Yogurt Drink | |
|---|---|
| Flavor deterioration inhibitor (Added amount: 10 ppm) | Average of sensory evaluation |
| Inhibitor-free product | 3.5 |
| L-Ascorbic acid | 3.1 |
| Product added with pericarps/water extract | 0.7 |
| Product added with pericarps/50 % by weight ethanol extract | 0.5 |
| Product added with seeds/50 % by weight ethanol extract | 1.3 |
| Product added with pericarps/95 % by weight ethanol extract | 0.8 |
| Product added with pericarps/HP-20 purified product | 0. 4 |

As shown in Table 7, it has been found that drinks added with a flavor deterioration inhibitor comprising the avocado extract have a higher inhibiting effect on flavor deterioration, as compared with inhibitor-free drinks and drinks added with L-ascorbic acid.

[Test Example 8] (Lemon-flavored drink)

Lemon-flavored drink was prepared and inhibiting effect on flavor deterioration was evaluated in the completely same manner as in Test Example 3. The results are given in Table 8.

Table 8

| Lemon-flavored Drink | |
|---|---|
| Flavor deterioration inhibitor (Added amount: 5 ppm) | Average of sensory evaluation |
| Inhibitor-free product | 3.6 |
| L-Ascorbic acid | 3.5 |
| Product added with pericarps/water extract | 1.1 |
| Product added with pericarps/50.% by weight ethanol extract | 1.3 |

(continued)

| Lemon-flavored Drink | |
|---|---|
| Flavor deterioration inhibitor (Added amount: 5 ppm) | Average of sensory evaluation |
| Product added with seeds/50 % by weight ethanol extract | 1.8 |
| Product added with pericarps/95 % by weight ethanol extract | 1.5 |
| Product added with pericarps/HP-20 purified product | 1.0 |

As shown in Table 8, it has been found that drinks added with a flavor deterioration inhibitor comprising the avocado extract have a higher inhibiting effect on flavor deterioration, as compared with inhibitor-free drinks and drinks added with L-ascorbic acid.

[Test Example 9] (Lactic acid bacteria drink)

Lactic acid bacteria drink was prepared and inhibiting effect on flavor deterioration was evaluated in the completely same manner as in Test Example 4. The results are given in Table 9.

Table 9

| Lactic acid bacteria drink | |
|---|---|
| Flavor deterioration inhibitor (Added amount: 10 ppm) | Average of sensory evaluation |
| Inhibitor-free product | 4.0 |
| L-Ascorbic acid | 3.5 |
| Product added with pericarps/water extract | 0.8 |
| Product added with pericarps/50 % by weight ethanol extract | 0.6 |
| Product added with seeds/50 % by weight ethanol extract | 1.0 |
| Product added with pericarps/95 % by weight ethanol extract | 0.9 |
| Product added with pericarps/HP-20 purified product | 0.5 |

As shown in Table 9, it has been found that drinks added with a flavor deterioration inhibitor comprising the avocado extract have a higher inhibiting effect on flavor deterioration, as compared with inhibitor-free drinks and drinks added with L-ascorbic acid.

[Test Example 10] (100 % Orange drink)

100 % Orange drink was prepared and inhibiting effect on flavor deterioration was evaluated in the completely same manner as in Test Example 5. The results are given in Table 10.

Table 10

| 100 % Orange drink | |
|---|---|
| Flavor deterioration inhibitor (Added amount: 20 ppm) | Average of sensory evaluation |
| Inhibitor-free product | 3.5 |
| L-Ascorbic acid | 3.2 |
| Product added with pericarps/water extract | 1.0 |
| Product added with pericarps/50 % by weight ethanol extract. | 1.3 |
| Product added with seeds/50 % by weight ethanol extract | 1.1 |
| Product added with pericarps/95 % by weight ethanol extract | 1.4 |
| Product added with pericarps/HP-20 purified product | 0.9 |

As shown in Table 10, it has been found that drinks added with a flavor deterioration inhibitor comprising the avocado extract have a higher inhibiting effect on flavor deterioration, as compared with inhibitor-free drinks and drinks added with L-ascorbic acid.

Example

[Example 6] (Oral cleaning rinse)

Oral cleaning rinse was prepared by blending in the following formulation amounts.

| | |
|---|---|
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| A 1 % by weight solution of the pericarps/water extract in a 50 % by weight aqueous solution of ethanol | 0.1 g |
| Purified water | 72.1 g |

[Example 7] (Margarine)

A mixture of 55 g of shortening, 15 g of corn oil, 0.1 g of a 30 % β-carotene solution, 0.2 g of lecithin and 0.3 g of an emulsifier was sterilized by warming in hot water at 80° C for 10 minutes. On the other hand, a mixture of 27.9 g of water, 0.5 g of sodium chloride, 1 g of skim milk powder and 0.1 g of a 1 % by weight solution of the avocado seeds/ 50% by weight ethanol extract in a 50 % by weight aqueous solution of ethanol was heated up to 85° C in a hot water bath. The corn oil mixture and skim milk powder mixture thus obtained were cooled down to 50-60° C, respectively, and then both were admixed and stirred at 1,500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 8] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the avocado seeds/50 % by weight ethanol extract in a 50 % by weight aqueous solution of ethanol to finish vanilla extract of this invention.

[Example 9] Apple flavor

Apple flavor was prepared according to the following formulation.

| | |
|---|---|
| Isoamyl formate | 100 g |
| Isoamyl acetate | 100 g |
| Isoamyl hexanoate | 60 g |
| Isoamyl octanoate | 10 g |
| Geraniol | 10 g |
| Ethanol | 430 g |
| Distilled water | 290 g |

To 100 g of the above apple flavor was added 2 g of a 1 % by weight solution of the avocado pericarps/95 % by weight ethanol extract in a 50 % by weight aqueous solution of ethanol to complete apple flavor of this invention.

[Example 10] Grape flavor

Grape flavor was prepared according to the following formulation.

| | |
|---|---|
| Isoamyl isovalerate | 10 g |
| Cinnamyl alcohol | 5 g |
| Ethyl acetate | 60 g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight solution of the avocado pericarps/HP-20 purified product in a 50 % by weight aqueous solution of ethanol to complete grape flavor of this invention.

3. Oriental senna

Extraction Example

[Extraction Example 11] Extraction with water

Extraction was carried out by grinding 50 g of seeds of oriental senna, adding 500 g of water and heating under reflux for one hour.
After removing insoluble by filtration, the filtrate was concentrated under reduced pressure and freeze-dried to give 6.6 g of a yellowish brown powder (hereinafter referred to as "water extract"). This extract had the following physical properties:

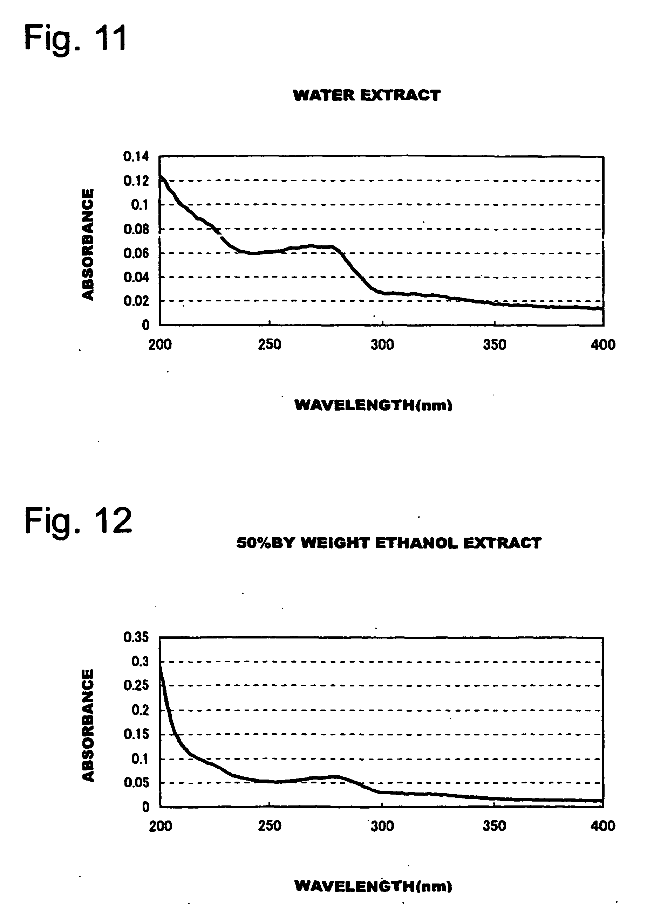

a) An ultraviolet spectrum is as shown in Fig. 11 (measurement concentration: 10 ppm, dilution solvent: distilled water) λ max: 277 nm, -269 nm
b) Solubility: Readily soluble in water, soluble in a 50 % by weight aqueous solution of ethanol, insoluble in ethanol.

[Extraction Example 12] Extraction with 50 % by weight aqueous solution of ethanol

Extraction was carried out by adding 500 g of a 50 % by weight aqueous solution of ethanol to 50 g of seeds of oriental senna, and heating under reflux for one hour.
After removing insoluble by filtration, the filtrate was concentrated under reduced pressure and freeze-dried to give 7.3 g of a brown powder (hereinafter referred to as "50 % by weight ethanol extract"). This extract had the following physical properties:

a) An ultraviolet spectrum is as shown in Fig. 12 (measurement concentration: 10 ppm, dilution solvent: 50 % by weight aqueous solution of ethanol).
λmax: 280 nm
b) Solubility: Soluble in water, readily soluble in a 50 % by weight aqueous solution of ethanol, insoluble in ethanol.

[Extraction Example 13] Extraction with 95 % by weight aqueous solution of ethanol

Extraction was carried out by grinding 50 g of seeds of oriental senna, adding 1000 g of a 95 % by weight aqueous solution of ethanol and heating under reflux for one hour.
After removing insoluble by filtration, the filtrate was concentrated under reduced pressure and freeze-dried to give 5.1 g of a brown powder (hereinafter referred to as "95 % by weight ethanol extract"). This extract had the following physical properties:

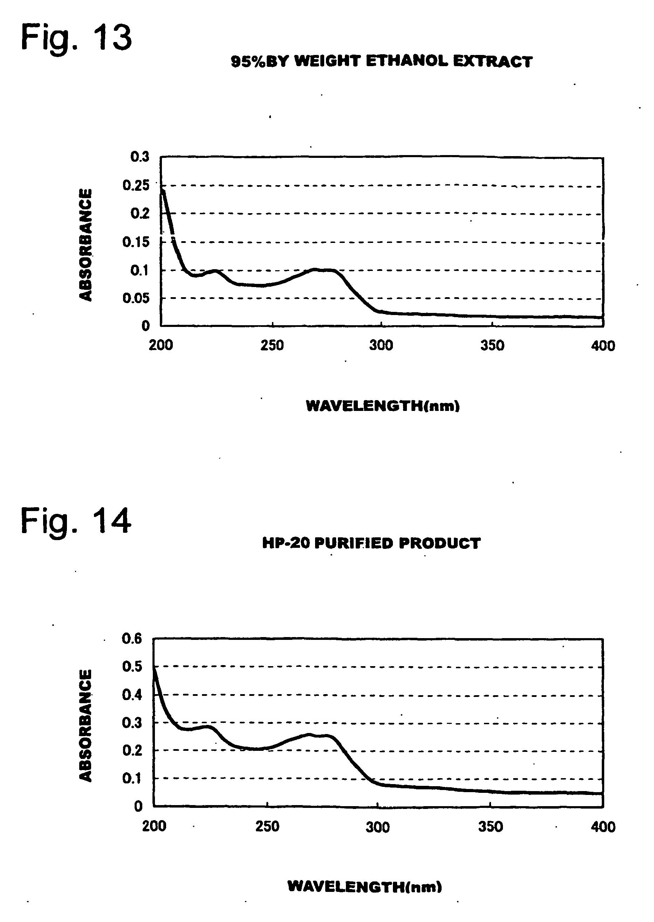

a) An ultraviolet spectrum is as shown in Fig. 13 (measurement concentration: 10 ppm, dilution solvent: 95 %

aqueous solution of ethanol)

λmax: 276 nm, 269 nm, 224 nm

b) Solubility: Insoluble in water, soluble in a 50 % by weight aqueous solution of ethanol, readily soluble in ethanol.

[Extraction Example 14] HP-20 purified product

Extraction was carried out by grinding 50 g of seeds of oriental senna, adding 2000 g of a 50 % by weight aqueous solution of ethanol and heating under reflux for one hour. After removing insoluble by filtration, the filtrate was concentrated under reduced pressure to 100 g.

100 g of the concentrate was adsorbed onto 100 ml of a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 2.0 g of a brown powder (hereinafter referred to as "HP-20 purified product"). This extract had the following physical properties:

a) An ultraviolet spectrum is as shown in Fig. 14 (measurement concentration: 10 ppm, dilution solvent: 50 % by weight aqueous solution of ethanol).

λmax: 277 nm, 269 nm, 224 nm

b) Solubility: Soluble in water, readily soluble in a 50 % by weight aqueous solution of ethanol, insoluble in ethanol.

Test Example

Then, the resulting oriental senna extract was evaluated for inhibiting effect on flavor deterioration.

[Test Example 11]

Inhibiting effect on flavor deterioration by the oriental senna extract was tested in the entirely same manner as in Test Example 1. The results are shown in Table 11.

Table 11

| Test for citral residual amount | |
| --- | --- |
| Flavor deterioration inhibitor (Added amount: 200 ppm) | Citral residual rate (%) |
| Inhibitor-free product | 32 |
| L-Ascorbic acid | 34 |
| Product added with water extract | 66 |
| Product added with 50 % by weight ethanol extract | 68 |
| Product added with 95 % by weight ethanol extract | 63 |
| Product added with HP-20 purified product | 81 |

As shown in Table 11, products added with a flavor deterioration inhibitor comprising oriental senna extract strongly inhibited decrease in citral by light irradiation, as compared with inhibitor-free product and product added with L-ascorbic acid.

Then, flavor inhibiting effect was evaluated by adding the oriental senna extract obtained by the above extraction to various foods.

[Test Example 12] (Yogurt drink)

Yogurt drink was prepared and inhibiting effect on flavor deterioration was evaluated in the completely same manner as in Test Example 2. The results are shown in Table 12.

Table 12

| Yogurt Drink | |
|---|---|
| Flavor deterioration inhibitor (Added amount: 10 ppm) | Average of sensory evaluation |
| Inhibitor-free product | 3.7 |
| L-Ascorbic acid | 3.4 |
| Product added with water extract | 1.2 |
| Product added with 50 % by weight ethanol extract | 1.3 |
| Product added with 95 % by weight ethanol extract | 1.1 |
| Product added with HP-20 purified product | 1.0 |

As shown in Table 12, it has been found that drinks added with a flavor deterioration inhibitor comprising oriental senna extract have a higher inhibiting effect on flavor deterioration, as compared with inhibitor-free drinks and drinks added with L-ascorbic acid.

[Test Example 13] (Lemon-flavored drink)

Lemon-flavored drink was prepared and inhibiting effect on flavor deterioration by the oriental senna extract was evaluated in the completely same manner as in Test Example 3. The results are given in Table 13.

Table 13

| Lemon-flavored Drink | |
|---|---|
| Flavor deterioration inhibitor (Added amount: 5 ppm) | Average of sensory evaluation |
| Inhibitor-free product | 3.7 |
| L-Ascorbic acid | 3.2 |
| Product added with water extract | 1.3 |
| Product added with 50 % by weight ethanol extract | 1.3 |
| Product added with 95 % by weight ethanol extract | 1.5 |
| Product added with HP-20 purified product | 0.7 |

As shown in Table 13, it has been found that drinks added with a flavor deterioration inhibitor comprising oriental senna extract have a higher inhibiting effect on flavor deterioration, as compared with inhibitor-free drinks and drinks added with L-ascorbic acid.

[Test Example 14] (Lactic acid bacteria drink)

Lactic acid bacteria drink was prepared and inhibiting effect on flavor deterioration by the oriental senna extract was evaluated in the completely same manner as in Test Example 4. The results are given in Table 14.

Table 14

| Lactic acid bacteria drink | |
|---|---|
| Flavor deterioration inhibitor (Added amount: 10 ppm) | Average of sensory evaluation |
| Inhibitor-free product | 3.8 |
| L-Ascorbic acid | 3.4 |
| Product added with water extract | 1.1 |
| Product added with 50 % by weight ethanol extract | 1.3 |
| Product added with 95 % by weight ethanol extract | 1.2 |

(continued)

| Lactic acid bacteria drink | |
|---|---|
| Flavor deterioration inhibitor (Added amount: 10 ppm) | Average of sensory evaluation |
| Product added with HP-20 purified product | 0.8 |

As shown in Table 14, it has been found that drinks added with a flavor deterioration inhibitor comprising oriental senna extract have a higher inhibiting effect on flavor deterioration, as compared with inhibitor-free drinks and drinks added with L-ascorbic acid.

[Test Example 15] (100 % Orange drink)

100 % Orange drink was prepared and inhibiting effect on flavor deterioration by the oriental senna extract was evaluated in the completely same manner as in Test Example 5. The results are given in Table 15.

Table 15

| 100 % Orange drink | |
|---|---|
| Flavor deterioration inhibitor (Added amount: 20 ppm) | Average of sensory evaluation |
| Inhibitor-free product | 3.6 |
| L-Ascorbic acid | 3.2 |
| Product added with water extract | 0.9 |
| Product added with 50 % by weight ethanol extract | 1.1 |
| Product added with 95 % by weight ethanol extract | 1.0 |
| Product added with HP-20 purified product | 0.8 |

As shown in Table 15, it has been found that drinks added with a flavor deterioration inhibitor comprising the oriental senna extract have a higher inhibiting effect on flavor deterioration, as compared with inhibitor-free drinks and drinks added with L-ascorbic acid.

Example

[Example 11] (Oral cleaning rinse)

Oral cleaning rinse was prepared by blending in the following formulation amounts.

| | |
|---|---|
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| A 1 % by weight solution of the water solution extract in a 50 % by weight aqueous of ethanol | 0.1 g |
| Purified water | 72.1 g |

[Example 12] (Margarine)

A mixture of 55 g of shortening, 15 g of corn oil, 0.1 g of a 30 % $\beta$-carotene solution, 0.2 g of lecithin and 0.3 g of an emulsifier was sterilized by warming in hot water at 80° C for 10 minutes. On the other hand, a mixture of 27.9 g of water, 0.5 g of sodium chloride, 1 g of skim milk powder and 0.1 g of a 1 % by weight aqueous solution of 50 % by weight ethanol extract of oriental senna in 50 % by weight ethanol was heated up to 85° C in a hot water bath. The corn oil mixture and skim milk powder mixture thus obtained were cooled down to 50-60° C, respectively, and then both were admixed and stirred at 1, 500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 13] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the oriental senna/50 % by weight ethanol extract in a 50 % by weight aqueous solution of ethanol to finish vanilla extract of this invention.

[Example 14] Apple flavor

Apple flavor was prepared according to the following formulation.

| | |
|---|---|
| Isoamyl formate | 100 g |
| Isoamyl acetate | 100 g |
| Isoamyl hexanoate | 60 g |
| Isoamyl octanoate | 10 g |
| Geraniol | 10 g |
| Ethanol | 430 g |
| Distilled water | 290 g |

To 100 g of the above apple flavor was added 2 g of a 1 % by weight solution of the oriental senna/95 % by weight ethanol extract in a 50 % by weight aqueous solution in ethanol to complete apple flavor of this invention.

[Example 15] Grape flavor

Grape flavor was prepared according to the following formulation.

| | |
|---|---|
| Isoamyl isovalerate | 10 g |
| Cinnamyl alcohol | 5 g |
| Ethyl acetate | 60 g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight aqueous solution of the oriental senna/HP-20 purified product in a 50 % by weight aqueous solution in ethanol to complete grape flavor of this invention.

4. Common plantain

Extraction Example

[Extraction Example 15] Seeds/extraction with 25 % by weight aqueous solution of ethanol

Extraction was carried out by grinding 100 g of seeds of common plantain, adding 2 kg of 25 % by weight aqueous solution of ethanol and heating under reflux for one hour.
After removing insoluble by filtration, the filtrate was concentrated under reduced pressure and freeze-dried to give 5.9 g of a brown powder (hereinafter referred to as "seeds/25 % by weight ethanol extract"). This extract had the following physical properties:

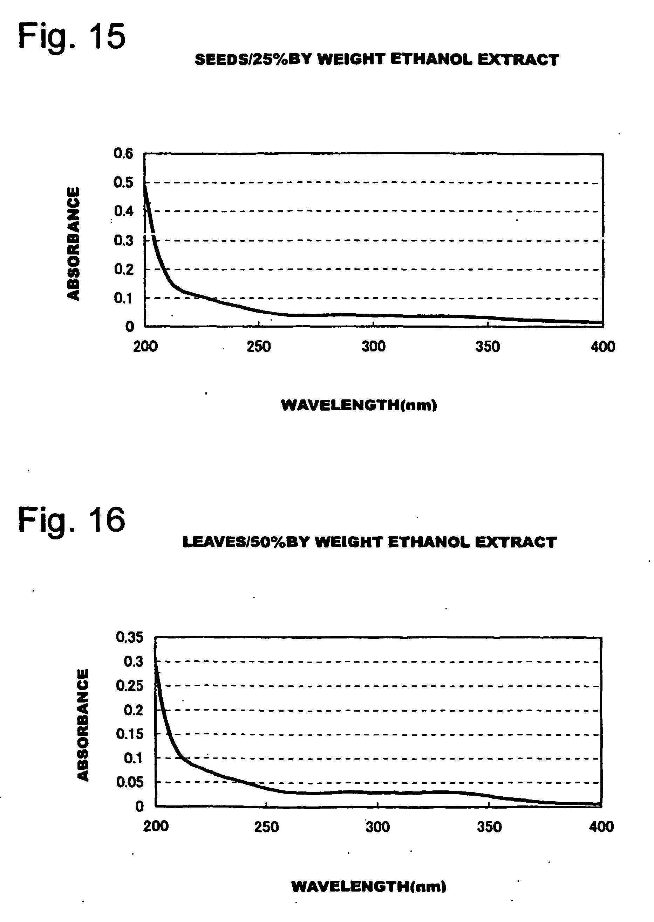

a) An ultraviolet spectrum is as shown in Fig. 15 (measurement concentration: 10 ppm, dilution solvent: 25 % by weight aqueous solution of ethanol).
λmax: 330 nm, 285 nm
b) Solubility: Soluble in water, readily soluble in a 50 % by weight aqueous solution of ethanol, insoluble in ethanol.

[Extraction Example 16] Leaves/extraction with 50 % by weight aqueous solution of ethanol

Extraction was carried out by grinding 50 g of dried common plantain leaves, adding 500 g of a 50 % by weight aqueous solution of ethanol and heating under reflux for one hour.

After removing insoluble by filtration, the filtrate was concentrated under reduced pressure and freeze-dried to give 10.2 g of a brown powder (hereinafter referred to as "leaves/50 % by weight ethanol extract"). This extract had the following physical properties:

a) An ultraviolet spectrum is as shown in Fig. 16 (measurement concentration: 10 ppm, dilution solvent: 50 % by weight ethanol)
λmax: 327 nm, 287 nm
b) Solubility: Soluble in water, readily soluble in a 50 % by weight aqueous solution of ethanol, insoluble in ethanol.

[Extraction Example 17] Seeds/extraction with 95 % by weight aqueous solution of ethanol

Extraction was carried out by grinding 50 g of seeds of common plantain, adding 1000 g of a 95 % by weight aqueous solution of ethanol and heating under reflux for one hour.

After removing insoluble by filtration, the filtrate was concentrated under reduced pressure and freeze-dried to give 2.4 g of a brown liquid (hereinafter referred to as "Seeds/95 % by weight ethanol extract"). This extract had the following physical properties:

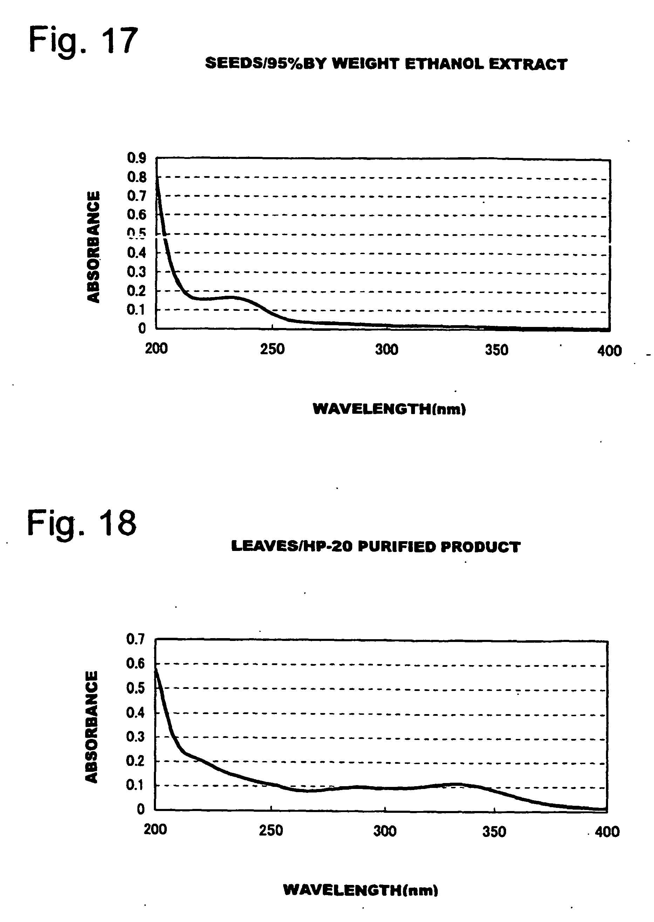

a) An ultraviolet spectrum is as shown in Fig. 17 (measurement concentration: 10 ppm, dilution solvent: 95 % by weight aqueous solution of ethanol).
λmax: 230 nm
b) Solubility: Insoluble in water, soluble in a 50 % by weight aqueous solution of ethanol, readily soluble in ethanol.

[Extraction Example 18] Leaves/HP-20 purified product

Extraction was carried out by grinding 20 g of dried common plantain leaves, adding 200 g of a 50 % by weight aqueous solution of ethanol and heating under reflux for one hour. After removing insoluble by filtration, the filtrate was concentrated under reduced pressure to 20 g.

To 20 g of the concentrated liquid was adsorbed onto 100 ml of a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 0.6 g of a brown powder (hereinafter referred t0 as "HP-20 purified product"). This extract had the following physical properties:

a) An ultraviolet spectrum is as shown in Fig. 18 (measurement concentration: 10 ppm, dilution solvent: 50 % by weight aqueous solution of ethanol).
λmax: 331 nm, 288 nm
b) Solubility: Soluble in water, readily soluble in a 50 % by weight aqueous solution of ethanol, insoluble in ethanol.

Test Example

Then, the resulting common plantain extract was evaluated for inhibiting effect on flavor deterioration.

[Test Example 16]

Inhibiting effect on flavor deterioration by the common plantain extract was tested in the entirely same manner as in Test Example 1. The results are shown in Table 16.

Table 16

| Test for citral residual amount | |
|---|---|
| Flavor deterioration inhibitor (Added amount: 200 ppm) | Citral residual rate (%) |
| Inhibitor-free product | 30 |
| L-Ascorbic acid | 32 |
| Product added with seeds/25 % by weight ethanol extract | 71 |
| Product added with leaves/50 % by weight ethanol extract | 68 |
| Product added with seeds/95 % by weight ethanol extract | 59 |
| Product added with leaves/HP-20 purified product | 89 |

As shown in Table 16, products added with a flavor deterioration inhibitor comprising common plantain extract strongly inhibited decrease in citral by light irradiation, as compared with inhibitor-free product and product added with L-ascorbic acid.

Then, flavor inhibiting effect was evaluated by adding the common plantain extract obtained by the above extraction to various foods.

[Test Example 17] (Yogurt drink)

Yogurt drink was prepared and inhibiting effect on flavor deterioration by the common plantain extract was evaluated in the completely same manner as in Test Example 2. The results are shown in Table 17.

Table 17

| Yogurt Drink | |
|---|---|
| Flavor deterioration inhibitor (Added amount: 10 ppm) | Average of sensory evaluation |
| Inhibitor-free product | 3.7 |
| L-Ascorbic acid | 3.5 |
| Product added with seeds/25 % by weight ethanol extract | 1.3 |
| Product added with leaves/50 % by weight ethanol extract | 1.0 |
| Product added with seeds/95 % by weight ethanol extract | 1.5 |
| Product added with leaves/HP-20 purified product | 0.7 |

As shown in Table 17, it has been found that drinks added with a flavor deterioration inhibitor comprising the common plantain extract have a higher inhibiting effect on flavor deterioration, as compared with inhibitor-free drinks and drinks added with L-ascorbic acid.

[Test Example 18] (Lemon-flavored drink)

Lemon-flavored drink was prepared and inhibiting effect on flavor deterioration by the common plantain extract was evaluated in the completely same manner as in Test Example 3. The results are given in Table 18.

Table 18

| Lemon-flavored Drink | |
|---|---|
| Flavor deterioration inhibitor (Added amount: 5 ppm) | Average of sensory evaluation |
| Inhibitor-free product | 3.7 |
| L-Ascorbic acid | 3.4 |
| Product added with seeds/25 % by weight ethanol extract | 1.2 |

(continued)

| Lemon-flavored Drink | |
|---|---|
| Flavor deterioration inhibitor (Added amount: 5 ppm) | Average of sensory evaluation |
| Product added with leaves/50 % by weight ethanol extract | 1.3 |
| Product added with seeds/95 % by weight ethanol extract | 1.6 |
| Product added with leaves/HP-20 purified product | 0.5 |

As shown in Table 18, it has been found that drinks added with a flavor deterioration inhibitor comprising common plantain extract have a higher inhibiting effect on flavor deterioration, as compared with inhibitor-free drinks and drinks added with L-ascorbic acid.

[Test Example 19] (Lactic acid bacteria drink)

Lactic acid bacteria drink was prepared and inhibiting effect on flavor deterioration by the common plantain extract was evaluated in the completely same manner as in Test Example 4. The results are given in Table 19.

Table 19

| Lactic acid bacteria drink | |
|---|---|
| Flavor deterioration inhibitor (Added amount: 10 ppm) | Average of sensory evaluation |
| Inhibitor-free product | 4.0 |
| L-Ascorbic acid | 3.5 |
| Product added with seeds/25 % by weight ethanol extract | 1.2 |
| Product added with leaves/50 % by weight ethanol extract | 0.9 |
| Product added with seeds/95 % by weight ethanol extract | 1.0 |
| Product added with leaves/HP-20 purified product | 0.7 |

As shown in Table 19, it has been found that drinks added with a flavor deterioration inhibitor comprising the common plantain extract have a higher inhibiting effect on flavor deterioration, as compared with inhibitor-free drinks and drinks added with L-ascorbic acid.

[Test Example 20] (100 % Orange drink)

100 % Orange drink was prepared and inhibiting effect on flavor deterioration by the common plantain extract was evaluated in the completely same manner as in Test Example 5. The results are given in Table 20.

Table 20

| 100 % Orange drink | |
|---|---|
| Flavor deterioration inhibitor (Added amount: 20 ppm) | Average of sensory evaluation |
| Inhibitor-free product | 3.3 |
| L-Ascorbic acid | 3.1 |
| Product added with seeds/25 % by weight ethanol extract | 1.3 |
| Product added with leaves/50 % by weight ethanol extract | 1.1 |
| Product added with seeds/95 % by weight ethanol extract | 1.5 |
| Product added with leaves/HP-20 purified product | 1.0 |

As shown in Table 20, it has been found that drinks added with a flavor deterioration inhibitor comprising the common plantain extract have a higher inhibiting effect on flavor deterioration, as compared with inhibitor-free drinks and drinks added with L-ascorbic acid.

Example

[Example 16] (Oral cleaning rinse)

Oral cleaning rinse was prepared by blending in the following formulation amounts.

| | |
|---|---|
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| A 1 % by weight solution of the leaves/HP-20 weight aqueous purified product in a 50 % by solution of ethanol | 0.1 g |
| Purified water | 72.1 g |

[Example 17] (Margarine)

A mixture of 55 g of shortening, 15 g of corn oil, 0.1 g of a 30 % β-carotene solution, 0.2 g of lecithin and 0.3 g of an emulsifier was sterilized by warming in hot water at 80° C for 10 minutes. On the other hand, a mixture of 27.9 g of water, 0.5 g of sodium chloride, 1 g of skim milk powder and 0.1 g of a 1 % by weight aqueous solution of the common plantain seeds/95 % by weight ethanol extract in a 95 % by weight aqueous solution of ethanol was heated up to 85° C in a hot water bath. The corn oil mixture and skimmilk powder mixture thus obtained were cooled down to 50-60° C, respectively, and then both were admixed and stirred at 1,500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 18] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the common plantain leaves/50 % by weight ethanol extract in a 50 % by weight aqueous solution of ethanol to finish vanilla extract of this invention.

[Example 19] Apple flavor

Apple flavor was prepared according to the following formulation.

| | |
|---|---|
| Isoamyl formate | 100 g |
| Isoamyl acetate | 100 g |
| Isoamyl hexanoate | 60 g |
| Isoamyl octanoate | 10 g |
| Geraniol | 10 g |
| Ethanol | 430 g |
| Distilled water | 290 g |

To 100 g of the above apple flavor was added 2 g of a 1 % by weight solution of the common plantain seeds/ 25 % by weight ethanol extract in a 25 % by weight aqueous solution of ethanol to complete apple flavor of this invention.

[Example 20] Grape flavor

Grape flavor was prepared according to the following formulation.

| Isoamyl isovalerate | 10 g |
| Cinnamyl alcohol | 5 g |
| Ethyl acetate | 60 g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight solution of the common plantain leaves/HP-20 purified product in a 50 % by weight aqueous solution of ethanol to complete grape flavor of this invention.

5. Hawthorn

Extraction Example

[Extraction Example 19] Extraction with water

Extraction was carried out by grinding 50 g of dried fruits of hawthorn, adding 500 g of water and heating under reflux for one hour.
After removing insoluble by filtration, the filtrate was concentrated under reduced pressure and freeze-dried to give 3. 3 g of a brown powder (hereinafter referred to as "water extract"). This extract had the following physical properties:

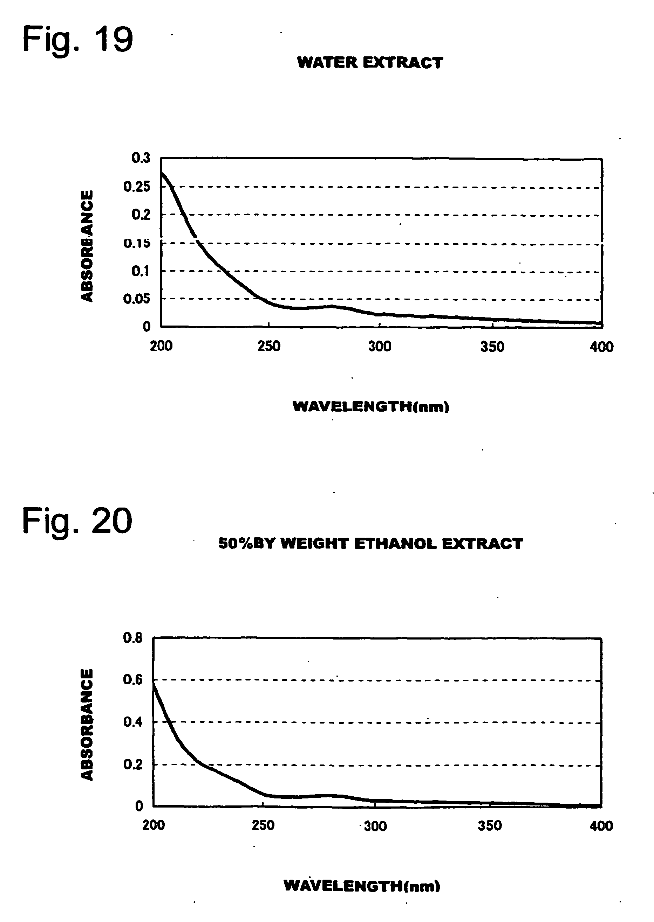

a) An ultraviolet spectrum is as shown in Fig. 19 (measurement concentration: 10 ppm, dilution solvent: distilled water).
λ max: 278 nm
b) Solubility: Readily soluble in water, soluble in a 50 % by weight aqueous solution of ethanol, insoluble in ethanol.

[Extraction Example 20] Extraction with 50 % by weight aqueous solution of ethanol

Extraction was carried out by grinding 50 g of dried fruits of hawthorn, adding 500 g of a 50 % by weight aqueous solution of ethanol and heating under reflux for one hour.
After removing insoluble by filtration, the filtrate was concentrated under reduced pressure and freeze-dried to give 5.0 g of a brown powder (hereinafter referred to as "50 % by weight ethanol extract"). This extract had the following physical properties:

a) An ultraviolet spectrum is as shown in Fig. 20 (measurement concentration: 10 ppm, dilution solvent: 50 % aqueous solution or ethanol).
λ max: 280 nm
b) Solubility: Soluble in water, readily soluble in a 50 % by weight aqueous solution of ethanol, insoluble in ethanol.

[Extraction Example 21] Extraction with 95 % by weight aqueous solution of ethanol

Extraction was carried out by grinding 50 g of dried fruits of hawthorn, adding 1000 g of a 95 % by weight aqueous solution of ethanol and heating under reflux for one hour.
After removing insoluble by filtration, the filtrate was concentrated under reduced pressure and freeze-dried to give 1. 4 g of a brown powder (hereinafter referred to as "95 % by weight ethanol extract"). This extract had the following physical properties:

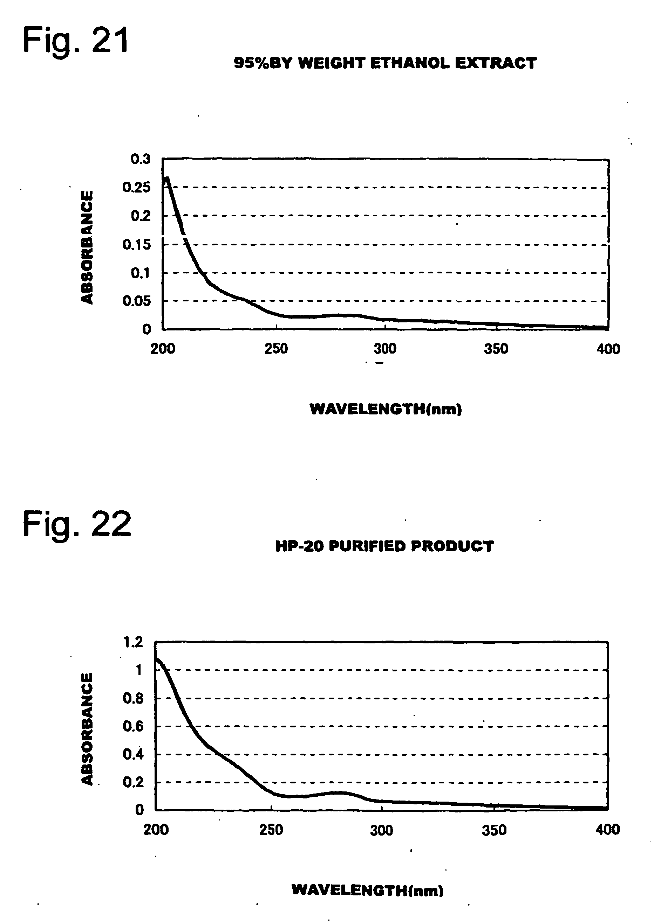

a) An ultraviolet spectrum is as shown in Fig. 21 (measurement concentration: 10 ppm, dilution solvent: 95 % aqueous solution of ethanol)
λmax: 278 nm, 202 nm
b) Solubility: Insoluble in water, soluble in a 50 % by weight aqueous solution of ethanol, readily soluble in ethanol.

[Extraction Example 22] HP-20 purified product

Extraction was carried out by grinding 50 g of dried fruits of hawthorn, adding 2000 g of a 50 % by weight aqueous solution of ethanol and heating under reflux for one hour. After removing insoluble by filtration, the filtrate was concentrated under reduced pressure to 100 g.

To 100 g of the concentrated liquid was adsorbed onto 100 ml or a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 1.3 g of a brown powder (hereinafter referred to as "HP-20 purified product"). This extract had the following physical properties:

a) An ultraviolet spectrum is as shown in Fig. 22 (measurement concentration: 10 ppm, dilution solvent: 50 % by weight aqueous solution of ethanol).

$\lambda$ max: 280 nm

b) Solubility: Soluble in water, readily soluble in a 50 % by weight aqueous solution of ethanol, insoluble in ethanol.

Test Example

Then, the resulting hawthorn extract was evaluated for inhibiting effect on flavor deterioration.

[Test Example 21]

Inhibiting effect on flavor deterioration by the hawthorn extract was tested in the entirely same manner as in Test Example 1. The results are shown in Table 2 1.

Table 21

| Test for citral residual amount | |
|---|---|
| Flavor deterioration inhibitor (Added amount: 200 ppm) | Citral residual rate (%) |
| Inhibitor-free product | 31 |
| L-Ascorbic acid | 33 |
| Product added with water extract | 68 |
| Product added with 50 % by weight ethanol extract | 71 |
| Product added with 95 % by weight ethanol extract | 65 |
| Product added with HP-20 purified product | 77 |

As shown in Table 21, products added with a flavor deterioration inhibitor comprising the hawthorn extract strongly inhibited decrease in citral by light irradiation, as compared with inhibitor-free product and product added with L-ascorbic acid.

Then, flavor inhibiting effect was evaluated by adding the hawthorn extract obtained by the above extraction to various foods.

[Test Example 22] (Yogurt drink)

Yogurt drink was prepared and inhibiting effect on flavor deterioration by the hawthorn extract was evaluated in the completely same manner as in Test Example 2. The results are shown in Table 22.

Table 22

| Yogurt Drink | |
|---|---|
| Flavor deterioration inhibitor (Added amount: 10 ppm) | Average of sensory evaluation |
| Inhibitor-free product | 3.6 |
| L-Ascorbic acid | 3.3 |
| Product added with water extract | 1.1 |

(continued)

| Yogurt Drink | |
|---|---|
| Flavor deterioration inhibitor (Added amount: 10 ppm) | Average of sensory evaluation |
| Product added with 50 % by weight ethanol extract | 1.2 |
| Product added with 95 % by weight ethanol extract | 1.3 |
| Product added with HP-20 purified product | 0.7 |

As shown in Table 22, it has been found that drinks added with a flavor deterioration inhibitor have a higher inhibiting effect on flavor deterioration, as compared with inhibitor- free drinks and drinks added with L-ascorbic acid.

[Test Example 23] (Lemon-flavored drink)

Lemon-flavored drink was prepared and inhibiting effect on flavor deterioration by the hawthorn extract was evaluated in the completely same manner as in Test Example 3.

Table 23

| Lemon-flavored Drink | |
|---|---|
| Flavor deterioration inhibitor (Added amount: 5 ppm) | Average of sensory evaluation |
| Inhibitor-free product | 3.8 |
| L-Ascorbic acid | 3.4 |
| Product added with water extract | 1.4 |
| Product with 50 % by weight ethanol extract | 1.0 |
| Product added with 95 % by weight ethanol extract | 1.2 |
| Product added with HP-20 purified product | 0.9 |

As shown in Table 23, it has been found that drinks added with a flavor deterioration inhibitor comprising the hawthorn extract have a higher inhibiting effect on flavor deterioration, as compared with inhibitor-free drinks and drinks added with L-ascorbic acid.

[Test Example 24] (Lactic acid bacteria drink)

Lactic acid bacteria drink was prepared and inhibiting effect on flavor deterioration by the hawthorn extract was evaluated in the completely same manner as in Test Example 4. The results are given in Table 24.

Table 24

| Lactic acid bacteria drink | |
|---|---|
| Flavor deterioration inhibitor (Added amount: 10 ppm) | Average of sensory evaluation |
| Inhibitor-free product | 3.9 |
| L-Ascorbic acid | 3.5 |
| Product added with water extract | 1.1 |
| Product added with 50 % by weight ethanol extract | 1.2 |
| Product added with 95 % by weight ethanol extract | 1.1 |
| Product added with HP-20 purified product | 0.6 |

As shown in Table 24, it has been found that drinks added with a flavor deterioration inhibitor comprising the hawthorn extract have a higher inhibiting effect on flavor deterioration, as compared with inhibitor-free drinks and drinks added with L-ascorbic acid.

[Test Example 25] (100 % Orange drink)

100 % Orange drink was prepared and inhibiting effect on flavor deterioration by the hawthorn extract was evaluated in the completely same manner as in Test Example 5. The results are given in Table 25.

Table 25

| 100 % Orange drink | |
| --- | --- |
| Flavor deterioration inhibitor (Added amount: 20 ppm) | Average of sensory evaluation |
| Inhibitor-free product | 3.5 |
| IL-Ascorbic acid | 3.4 |
| Product added with water extract | 1.0 |
| Product added with 50 % by weight ethanol extract | 1.4 |
| Product added with 95 % by weight ethanol extract | 1.3 |
| Product added with HP-20 purified product | 0.8 |

As shown in Table 25, it has been found that drinks added with a flavor deterioration inhibitor comprising the hawthorn extract have a higher inhibiting effect on flavor deterioration, as compared with inhibitor-free drinks and drinks added with L-ascorbic acid.

Example

[Example 21] (Oral cleaning rinse)

Oral cleaning rinse was prepared by blending in the following formulation amounts.

| | |
| --- | --- |
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| A 1 % by weight solution of the water solution of extract in a 50 % by weight aqueous ethanol | 0.1 g |
| Purified water | 72.1 g |

[Example 22] (Margarine)

A mixture of 55 g of shortening, 15 g of corn oil; 0.1 g of a 30 % β-carotene solution, 0.2 g of lecithin and 0.3 g of an emulsifier was sterilized by warming in hot water at 80° C for 10 minutes. On the other hand, a mixture of 27.9 g of water, 0.5 g of sodium chloride, 1 g of skim milk powder and 0.1 g of a 1 % by weight solution of the hawthorn 50 % by weight ethanol extract in a 50 % by weight aqueous solution of ethanol was heated up to 85° C in a hot water bath. The corn oil mixture and skim milk powder mixture thus obtained were cooled down to 50-60° C, respectively, and then both were admixed and stirred at 1, 500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 23] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the hawthorn 95 % by weight ethanol extract in a 50 % by weight aqueous solution of ethanol to finish vanilla extract of this invention.

[Example 24] Apple flavor

Apple flavor was prepared according to the following formulation.

| | |
|---|---|
| Isoamyl formate | 100 g |
| Isoamyl acetate | 100 g |
| Isoamyl hexanoate | 60 g |
| Isoamyl octanoate | 10 g |
| Geraniol | 10 g |
| Ethanol | 430 g |
| Distilled water | 290 g |

To 100 g of the above apple flavor was added 2 g of a 1 % by weight solution of the hawthorn HP-20 purified product in a 50 % by weight aqueous solution of ethanol to complete apple flavor of this invention.

[Example 25] Grape flavor

Grape flavor was prepared according to the following formulation.

| | |
|---|---|
| Isoamyl isovalerate | 10 g |
| Cinnamyl alcohol | 5 g |
| Ethyl acetate | 60 g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight solution of the hawthorn water extract in a 50 % by weight aqueous solution of ethanol to complete grape flavor of this invention.

6. Fermented tea leaves

Extraction Example

[Extraction Example 23] Extraction with water

Extraction was carried out by adding 500 g of water to 50 g of black tea leaves and heating under reflux for one hour.
After removing insoluble by filtration, the filtrate was concentrated under reduced pressure and freeze-dried to give 9.0 g of a brown powder (hereinafter referred to as "water extract"). This extract had the following physical properties:

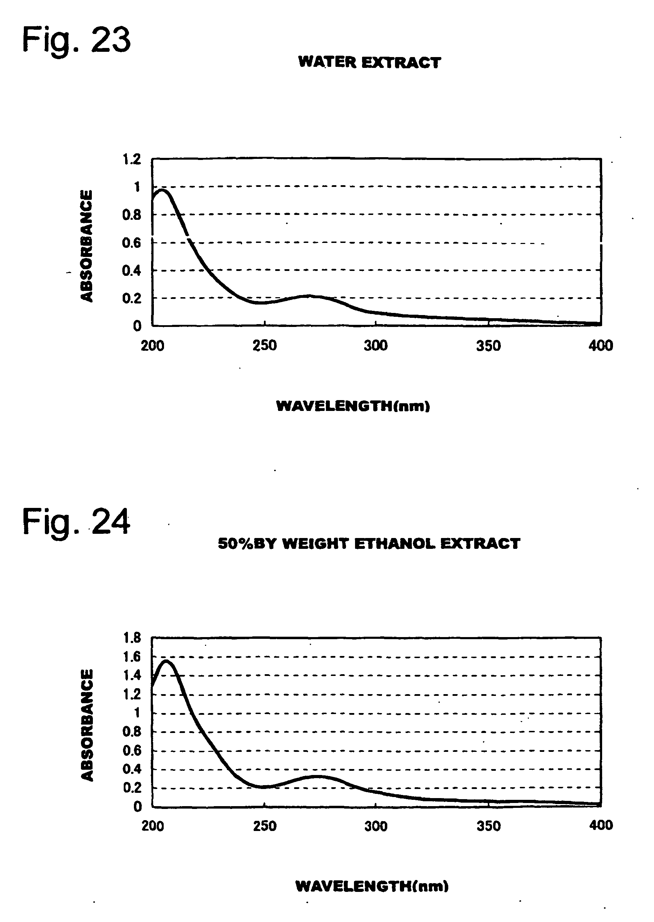

a) An ultraviolet spectrum is as shown in Fig. 23 (measurement concentration: 20 ppm, dilution solvent: distilled water).
$\lambda$max: 269 nm, 204 nm
b) Solubility: Readily soluble in water, soluble in a 50 % by weight aqueous solution of ethanol, insoluble in ethanol.

[Extraction Example 24] Extraction with 50 % by weight aqueous solution of ethanol

Extraction was carried out by adding 500 g of a 50 % by weight aqueous solution of ethanol to 50 g of black tea leaves and heating under reflux for one hour.

After removing insoluble by filtration, the filtrate was concentrated under reduced pressure and freeze-dried to give 15.1 g of a brown powder (hereinafter referred to as "50 % by weight ethanol extract"). This extract had the following physical properties:

a) An ultraviolet spectrum is as shown in Fig. 24 (measurement concentration: 20ppm, dilution solvent: 50 % aqueous solution of ethanol).
λ max : 273 nm, 207 nm
b) Solubility: Soluble in water, readily soluble in a 50 % by weight aqueous solution of ethanol, insoluble in ethanol.

[Extraction Example 25] Extraction with 95 % by weight aqueous solution of ethanol

Extraction was carried out by adding 500 g of a 95 % by weight aqueous solution of ethanol to 50 g of black tea leaves and heating under reflux for one hour.

After removing insoluble by filtration, the filtrate was concentrated under reduced pressure and freeze-dried to give 10.1 g of a brown powder (hereinafter referred to as "95 % by weight ethanol extract"). This extract had the following physical properties:

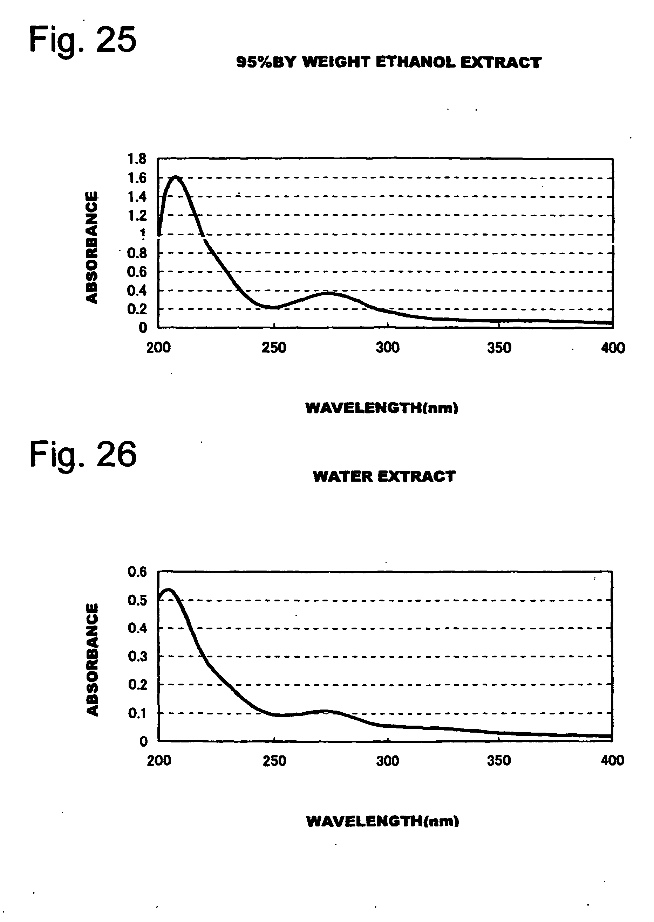

a) An ultraviolet spectrum is as shown in Fig. 25 (measurement concentration: 20 ppm, dilution solvent: 95 % aqueous solution of ethanol).
λ max: 273 nm, 207 nm
b) Solubility: Insoluble in water, soluble in a 50 % by weight aqueous solution of ethanol, readily soluble in ethanol.

Test Example

Then, the resulting fermented tea leaves extract was evaluated for inhibiting effect on flavor deterioration.

[Test Example 26]

Inhibiting effect on flavor deterioration by the fermented tea leaves extract was tested in the entirely same manner as in Test Example 1. The results are shown in Table 26.

Table 26

| Test for citral residual amount | |
| --- | --- |
| Flavor deterioration inhibitor (Added amount: 200 ppm) | Citral residual rate (%) |
| Inhibitor-free product | 30 |
| L-Ascorbic acid | 33 |
| Product added with water extract | 79 |
| Product added with 50 % by weight ethanol extract | 76 |
| Product added with 95 % by weight ethanol extract | 83 |

As shown in Table 26, products added with a flavor deterioration inhibitor comprising the fermented tea leaves extract strongly inhibited decrease in citral by light irradiation, as compared with inhibitor-free product and product added with L-ascorbic acid.

Then, flavor inhibiting effect was evaluated by adding the fermented tea leaves extract obtained by the above extraction to various foods.

[Test Example 27] (Yogurt drink)

Yogurt drink was prepared and inhibiting effect on flavor deterioration by the fermented tea leaves extract was evaluated in the completely same manner as in Test Example 2. The results are shown in Table 27.

Table 27

| Yogurt Drink | |
|---|---|
| Flavor deterioration inhibitor (Added amount: 10 ppm) | Average of sensory evaluation |
| Inhibitor-free product | 3.7 |
| L-Ascorbic acid | 3.3 |
| Product added with water extract | 1.5 |
| Product added with 50 % by weight ethanol extract | 1.2 |
| Product added with 95 % by weight ethanol extract | 0.9 |

As shown in Table 27, it has been found that drinks added with a flavor deterioration inhibitor comprising the fermented tea leaves extract have a higher inhibiting effect on flavor deterioration, as compared with inhibitor-free drinks and drinks added with L-ascorbic acid.

[Test Example 28] (Lemon-flavored drink)

Lemon-flavored drink was prepared and inhibiting effect on flavor deterioration by the fermented tea leaves extract was evaluated in the completely same manner as in Test Example 3. The results are shown in Table 28.

Table 28

| Lemon-flavored Drink | |
|---|---|
| Flavor deterioration inhibitor (Added amount: 5 ppm) | Average of sensory evaluation |
| Inhibitor-free product | 3.8 |
| L-Ascorbic acid | 3.5 |
| Product added with water extract | 0.7 |
| Product added with 50 % by weight ethanol extract | 0.9 |
| Product added with 95 % by weight ethanol extract | 0.6 |

As shown in Table 28, it has been found that drinks added with a flavor deterioration inhibitor comprising the fermented tea leaves extract have a higher inhibiting effect on flavor deterioration, as compared with inhibitor-free drinks and drinks added with L-ascorbic acid.

[Test Example 29] (Lactic acid bacteria drink)

Lactic acid bacteria drink was prepared and inhibiting effect on flavor deterioration by the black tea leaves extract was evaluated in the completely same manner as in Test Example 4. The results are given in Table 29.

Table 29

| Lactic acid bacteria drink | |
|---|---|
| Flavor deterioration inhibitor (Added amount: 10 ppm) | Average of sensory evaluation |
| Inhibitor-free product | 3.7 |
| L-Ascorbic acid | 3.4 |
| Product added with water extract | 1.3 |
| Product added with 50 % by weight ethanol extract | 1.1 |
| Product added with 95 % by weight ethanol extract | 0.8 |

As shown in Table 29, it has been found that drinks added with a flavor deterioration inhibitor comprising the fermented tea leaves extract have a higher inhibiting effect on flavor deterioration, as compared with inhibitor-free drinks and drinks added with L-ascorbic acid.

[Test Example 30] (100 % Orange drink)

100 % Orange drink was prepared and inhibiting effect on flavor deterioration by the fermented tea leaves extract was evaluated in the completely same manner as in Test Example 5. The results are given in Table 30.

Table 30

| 100 % Orange drink | |
| --- | --- |
| Flavor deterioration inhibitor (Added amount: 20 ppm) | Average of sensory evaluation |
| Inhibitor-free product | 3.2 |
| L-Ascorbic acid | 3.1 |
| Product added with water extract | 1.1 |
| Product added with 50 % by weight ethanol extract | 1.0 |
| Product added with 95 % by weight ethanol extract | 1.5 |

As shown in Table 30, it has been found that drinks added with a flavor deterioration inhibitor comprising the fermented tea leaves extract have a higher inhibiting effect on flavor deterioration, as compared with inhibitor-free drinks and drinks added with L-ascorbic acid.

Example

[Example 26] (Oral cleaning rinse)

Oral cleaning rinse was prepared by blending in the following formulation amounts.

| | |
| --- | --- |
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| A 1 % by weight solution of the water extract in a 50 % by weight aqueous solution of ethanol | 0.1 g |
| Purified water | 72.1 g |

[Example 27] (Margarine)

A mixture of 55 g of shortening, 15 g of corn oil, 0.1 g of a 30 % β-carotene solution, 0.2 g of lecithin and 0.3 g of an emulsifier was sterilized by warming in hot water at 80° C for 10 minutes. On the other hand, a mixture of 27.9 g of water, 0.5 g of sodium chloride, 1 g of skim milk powder and 0.1 g of a 1 % by weight aqueous solution of 50 % by weight ethanol extract of black tea leaves in 50 % by weight ethanol was heated up to 85° C in a hot water bath. The corn oil mixture and skim milk powder mixture thus obtained were cooled down to 50-60° C, respectively, and then both were admixed and stirred at 1,500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 28] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the 95 % by weight ethanol extract of black tea leaves in a 50 % by weight aqueous solution of ethanol to finish vanilla extract of this invention.

[Example 29] Apple flavor

Apple flavor was prepared according to the following formulation.

| | |
|---|---|
| Isoamyl formate | 100 g |
| Isoamyl acetate | 100 g |
| Isoamyl hexanoate | 60 g |
| Isoamyl octanoate | 10 g |
| Geraniol | 10 g |
| Ethanol | 430 g |
| Distilled water | 290 g |

To 100 g of the above apple flavor was added 2 g of a 1 % by weight solution of the 50 % by weight ethanol extract of black tea leaves in a 50 % by weight aqueous solution of ethanol to complete apple flavor of this invention.

[Example 30] Grape flavor

Grape flavor was prepared according to the following formulation.

| | |
|---|---|
| Isoamyl isovalerate | 10 g |
| Cinnamyl alcohol | 5 g |
| Ethyl acetate | 60. g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight solution of the water extract of black tea leaves in a 50 % by weight aqueous solution of ethanol to complete grape flavor of this invention.

7. Semi-fermented tea leaves

Extraction Example

[Extraction Example 26] Extraction with water

Extraction was carried out by adding 500 g of water to 50 g of oolong tea leaves and heating under reflux for one hour.
After removing insoluble by filtration, the filtrate was concentrated under reduced pressure and freeze-dried to give 9.8 g of a brown powder (hereinafter referred to as "water extract"). This extract had the following physical properties:

a) An ultraviolet spectrum is as shown in Fig. 26 (measurement concentration: 10 ppm, dilution solvent: distilled water).
λmax: 273 nm, 204 nm
b) Solubility: Readily soluble in water, soluble in a 50 % by weight aqueous solution of ethanol, insoluble in ethanol.

[Extraction Example 27]

Extraction was carried out by adding 500 g of a 50 % by weight aqueous solution of ethanol to 50 g of oolong tea leaves and standing at room temperature for 12 hours.

After removing insoluble by filtration, the filtrate was concentrated under reduced pressure and freeze-dried to give 12.5 g of a brown powder (hereinafter referred to as "50 % by weight ethanol extract"). This extract had the following physical properties.

a) An ultraviolet spectrum is as shown in Fig. 27 (measurement concentration: 10 ppm, dilution solvent: 50 % aqueous solution of ethanol).
λmax: 274 nm, 205 nm
b) Solubility: Soluble in water, readily soluble in a 50 % by weight aqueous solution of ethanol, insoluble in ethanol.

[Extraction Example 28] Extraction with 95 % by weight aqueous solution of ethanol

Extraction was carried out by adding 500 g of a 95 % by weight aqueous solution of ethanol to 50 g of oolong tea leaves and heating under reflux for one hour.
After removing insoluble by filtration, the filtrate was concentrated under reduced pressure and freeze-dried to give 10.3 g of a brown powder (hereinafter referred to as "95 % by weight ethanol extract"). This extract had the following physical properties:

a) An ultraviolet spectrum is as shown in Fig. 28 (measurement concentration: 10 ppm, dilution solvent: 95% aqueous solution of ethanol).
λmax : 274 nm, 206 nm
b) Solubility: Insoluble in water, soluble in a 50 % by weight aqueous solution of ethanol, readily soluble in ethanol.

Test Example

Then, the resulting semi-fermented tea leaves extract was evaluated for inhibiting effect on flavor deterioration.

[Test Example 31]

Inhibiting effect on flavor deterioration by the semi-fermented tea leaves extract was tested in the entirely same manner as in Test Example 1. The results are shown in Table 31.

Table 31

| Test for citral residual amount | |
| --- | --- |
| Flavor deterioration inhibitor (Added amount: 200 ppm) | Citral residual rate (%) |
| Inhibitor-free product | 29 |
| L-Ascorbic acid | 34 |
| Product added with water extract | 74 |
| Product added with 50 % by weight ethanol extract | 72 |
| Product added with 95 % by weight ethanol extract | 68 |

As shown in Table 31, products with a flavor deterioration inhibitor comprising the semi-fermented tea leaves extract strongly inhibited decrease in citral by light irradiation, as compared with inhibitor-free product and product added with L-ascorbic acid.
Then, flavor inhibiting effect was evaluated by adding the semi-fermented tea leaves extract obtained by the above extraction to various foods.

[Test Example 32] (Yogurt drink)

Yogurt drink was prepared and inhibiting effect on flavor deterioration by the semi-fermented tea leaves extract was evaluated in the completely same manner as in Test Example 2. The results are shown in Tables

Table 32

| Yogurt Drink | |
| --- | --- |
| Flavor deterioration inhibitor (Added amount: 10 ppm) | Average of sensory evaluation |
| Inhibitor-free product | 3.9 |
| L-Ascorbic acid | 3.7 |
| Product added with water extract | 1.0 |
| Product added with 50 % by weight ethanol extract | 1.1 |
| Product added with 95 % by weight ethanol extract | 1.3 |

As shown in Table 32, it has been found that drinks with a flavor deterioration inhibitor comprising the semi-fermented tea leaves extract have a higher inhibiting effect on flavor deterioration, as compared with inhibitor-free drinks and drinks added with L-ascorbic acid.

[Test Example 33] (Lemon-flavored drink)

Lemon-flavored drink was prepared and inhibiting effect on flavor deterioration by the semi-fermented tea leaves extract was evaluated in the completely same manner as in Test Example 3. The results are shown in Table 33.

Table 33

| Lemon-flavored Drink | |
| --- | --- |
| Flavor deterioration inhibitor (Added amount: 5 ppm) | Average of sensory evaluation |
| Inhibitor-free product | 3.5 |
| L-Ascorbic acid | 3.4 |
| Product added with water extract | 1.1 |
| Product added with 50 % by weight ethanol extract | 1.2 |
| Product added with 95 % by weight ethanol extract | 1.5 |

As shown in Table 33, it has been found that drinks with a flavor deterioration inhibitor comprising the semi-fermented tea leaves extract have a higher inhibiting effect on flavor deterioration, as compared with inhibitor-free drinks and drinks added with L-ascorbic acid.

[Test Example 34] (Lactic acid bacteria drink)

Lactic acid bacteria drink was prepared and inhibiting effect on flavor deterioration by semi-fermented tea leaves extract was evaluated in the completely same manner as in Test Example 4. The results are given in Table 34.

Table 34

| Lactic acid bacteria drink | |
| --- | --- |
| Flavor deterioration inhibitor (Added amount: 10 ppm) | Average of sensory evaluation |
| Inhibitor-free product | 3.9 |
| L-Ascorbic acid | 3.2 |
| Product added with water extract | 1.0 |
| Product added with 50 % by weight ethanol extract | 1.2 |
| Product added with 95 % by weight ethanol extract | 1.0 |

As shown in Table 34, it has been found that drinks added with a flavor deterioration inhibitor comprising the semi-fermented tea leaves extract have a higher inhibiting effect on flavor deterioration, as compared with inhibitor-free drinks and drinks added with L-ascorbic acid.

[Test Example 35] (100 % Orange drink)

100 % Orange drink was prepared and inhibiting effect on flavor deterioration by the semi-fermented tea leaves extract was evaluated in the completely same manner as in Test Example 5. The results are given in Table 35.

Table 35

| 100 % Orange drink | |
| --- | --- |
| Flavor deterioration inhibitor (Added amount: 20 ppm) | Average of sensory evaluation |
| Inhibitor-free product | 3.2 |
| L-Ascorbic acid | 3.1 |
| Product added with water extract | 1.0 |
| Product added with 50 % by weight ethanol extract | 1.1 |
| Product added with 95 % by weight ethanol extract | 1.2 |

As shown in Table 35, it has been found that drinks added with a flavor deterioration inhibitor comprising the semi-fermented tea leaves extract have a higher inhibiting effect on flavor deterioration, as compared with inhibitor-free drinks and drinks added with L-ascorbic acid.

Example

[Example 31] (Oral cleaning rinse)

Oral cleaning rinse was prepared by blending in the following formulation amounts.

| | |
| --- | --- |
| Ethanol | 15.0 g |
| Glycerol | 10.0 g |
| Polyoxyethylene | 2.0 g |
| Saccharin sodium | 0.15 g |
| Sodium benzoate | 0.05 g |
| Flavor | 0.3 g |
| Sodium dihydrogenphosphate | 0.1 g |
| Coloring agent | 0.2 g |
| A 1 % by weight solution of the water extract in a 50 % by weight aqueous solution of ethanol | 0.1 g |
| Purified water | 72.1 g |

[Example 32] (Margarine)

A mixture of 55 g of shortening, 15 g of corn oil, 0.1 g of a 30 % $\beta$-carotene solution, 0.2 g of lecithin and 0.3 g of an emulsifier was sterilized by warming in hot water at 80° C for 10 minutes. On the other hand, a mixture of 27.9 g of water, 0.5 g of sodium chloride, 1 g of skim milk powder and 0.1 g of a 1 % by weight solution of the 95 % by weight ethanol extract of oolong tea leaves in a 50 % by weight aqueous solution of ethanol was heated up to 85° C in a hot water bath. The corn oil mixture and skim milk powder mixture thus obtained were cooled down to 50-60° C, respectively, and then both were admixed and stirred at 1,500 rpm for 5 minutes using disper, while cooling in ice-water. The whole mixture was kneaded well with a rubber spatula while cooling in water (cooling down to 10° C). It was placed into a vessel and matured in a refrigerator overnight to finish margarine.

[Example 33] (Vanilla extract)

A mixture of 10 g of vanilla beans with 35 g of ethanol and 65 g of distilled water was allowed to stand at room temperature in the dark for 4 weeks to accomplish extraction. This solution was filtered to obtain 90 g of vanilla extract. To 90 g of the extract was added 10 g of a 1 % by weight solution of the water extract of oolong tea leaves in a 50 % by weight aqueous solution of ethanol to finish vanilla extract of this invention.

[Example 34] Apple flavor

Apple flavor was prepared according to the following formulation.

| | |
|---|---|
| Isoamyl formate | 100 g |
| Isoamyl acetate | 100 |
| Isoamyl hexanoate | 60 g |
| Isoamyl octanoate | 10 g |
| Geraniol. | 10 g |
| Ethanol | 430 g |
| Distilled water | 290 g |

To 100 g of the above apple flavor was added 2 g of a 1 % by weight solution of the 50 % by weight ethanol extract of oolong tea leaves in a 50 % by weight aqueous solution of ethanol to complete apple flavor of this invention.

[Example 35] Grape flavor

Grape flavor was prepared according to the following formulation.

| | |
|---|---|
| Isoamyl isovalerate | 10 g |
| Cinnamyl alcohol | 5 g |
| Ethyl acetate | 60 g |
| Ethyl butyrate | 15 g |
| Ethyl 3-methyl-3-phenylglycidate | 10 g |
| Ethyl heptanoate | 8 g |
| Methyl anthranilate | 130 g |
| Methyl salicylate | 15 g |
| Ethanol | 373 g |
| Distilled water | 374 g |

To 100 g of the above grape flavor was added 1.0 g of a 1 % by weight solution of the 95% by weight ethanol extract of oolong tea leaves in a 50 % by weight aqueous solution of ethanol to complete grape flavor of this invention.

8. Inhibition of the generation of citral deterioration smell

Extraction Example

[Extraction Example 29]

Extraction was carried out by adding 1000 g of a 50 % by weight aqueous solution of ethanol to 100 g of dried leaves of Ashitaba and heating under reflux for one hour.
After removing insoluble by filtration, the filtrate was decolorized with 10 g of active carbon. After the active carbon was filtered off, the filtrate was concentrated under reduced pressure to 150 g.
50 g of the concentrate was adsorbed onto 100 ml of a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 5. 7 g of a brown powder (hereinafter referred to as "Ashitaba extract"). This extract had the following physical properties:

a) An ultraviolet spectrum is as shown in Fig. 29 (measurement concentration: 10 ppm, dilution solvent: 50 % by weight aqueous solution of ethanol).
λmax: 286 nm
b) Solubility: Soluble in water, readily soluble in a 50 % by weight aqueous solution of ethanol, insoluble in ethanol.

[Extraction Example 30]

Extraction was carried out by grinding 50 g of dried avocado pericarps, adding 500 g of a 50 % by weight aqueous solution of ethanol and heating under reflux for one hour.

After removing insoluble by filtration, the filtrate was concentrated under reduced pressure and freeze-dried to give 11.2 g of a reddish brown powder (hereinafter referred to as "avocado extract"). This extract had the following physical properties:

a) An ultraviolet spectrum is as shown in Fig. 30 (measurement concentration: 10 ppm, dilution solvent: 50 % by weigh aqueous solution of ethanol)
λmax: 280 nm, 201 nm
b) Solubility: Soluble in water, readily soluble in a 50 % by weight aqueous solution of ethanol, insoluble in ethanol.

[Extraction Example 31]

Extraction was carried out by grinding 100 g of seeds of common plantain, adding 2 kg of a 25 % by weight aqueous solution of ethanol and heating under reflux for one hour.

After removing insoluble by filtration, the filtrate was concentrated under reduced pressure and freeze-dried to give 5.9 g of a dark brown powder (hereinafter referred to as "common plantain extract"). This extract had the following physical properties:

a) An ultraviolet spectrum is as shown in Fig. 31 (measurement concentration: 10 ppm, dilution solvent: 25 % by weight aqueous solution of ethanol).
λmax: 330 nm, 285 nm
b) Solubility: Soluble in water, readily soluble in a 50 % by weight aqueous solution of ethanol, insoluble in ethanol.

[Extraction Example 32]

Extraction was carried out by adding 1 kg of a 95 % by weight aqueous solution of ethanol to 50 g of black tea leaves and heating under reflux for one hour. After removing insoluble by filtration, to the filtrate was added 5 g of active carbon and stirred at room temperature for one hour. After the active carbon was filtered off, the filtrate was concentrated under reduced pressure. Then, the concentrate was freeze-dried to give 10.1 g of a brown powder (hereinafter referred to as "black tea extract"). This extract had the following physical properties:

a) An ultraviolet spectrum is as shown in Fig. 32 (measurement concentration: 10 ppm, dilution solvent: 95 % aqueous solution of ethanol).
λmax: 273 nm, 207 nm
b) Solubility: Insoluble in water, soluble in a 50 % by weight aqueous solution of ethanol, readily soluble in ethanol.

[Extraction Example 33]

Extraction was carried out by adding 2 kg of a 50 % by weight aqueous solution of ethanol to 100 g of oolong leaves and standing at room temperature for 12 hours. After removing insoluble by filtration, the filtrate was concentrated under reduced pressure and then the concentrate was freeze-dried to give 25 g of a brown powder (hereinafter referred to as "oolong tea extract"). This extract had the following physical properties:

a) An ultraviolet spectrum is as shown in Fig. 33 (measurement concentration: 10 ppm, dilution solvent: 50 % aqueous solution of ethanol).
λmax: 274 nm, 205 nm
b) Solubility: Soluble in water, readily soluble in a 50 % by weight aqueous solution of ethanol, insoluble in ethanol.

[Extraction Example 34]

Extraction was carried out by grinding 50 g of dried seeds of oriental senna, adding 1000 g of a 50 % by weight aqueous solution of ethanol and heating under reflux for 2 hours. After removing insoluble by filtration, the filtrate was stirred with 10 g of active carbon for one hour. After the active carbon was filtered off, the filtrate was concentrated under reduced pressure to 100 g.

To 100 g of the concentrated liquid was adsorbed onto 100 ml of a porous synthetic adsorbent (DIAION HP-20). After washing with 400 ml of water, it was eluted using 400 ml of a 50 % by weight aqueous solution of ethanol. The eluate was concentrated under reduced pressure and freeze-dried to give 2.0 g of a brown powder (hereinafter referred to as "oriental senna extract"). This extract had the following physical properties:

al An ultraviolet spectrum is as shown in Fig. 34 (measurement concentration: 10 ppm, dilution solvent: 50 % by weight aqueous solution of ethanol).
λmax: 277 nm, 279 nm, 224 nm
b) Solubility: Soluble in water, readily soluble in a 50 % by weight aqueous solution of ethanol, insoluble in ethanol.

[Extraction Example 35]

Extraction was carried out by grinding 50 g of dried fruits of hawthorn, adding 250 g of a 50 % by weight aqueous solution of ethanol and heating under reflux for one hour.

After removing insoluble by filtration, the filtrate was concentrated under reduced pressure and freeze-dried to give 5 g of a brown powder (hereinafter referred to as "hawthorn extract"). This extract had the following physical properties:

a) An ultraviolet spectrum is as shown in Fig. 35 (measurement concentration: 10 ppm, dilution solvent: 50% aqueous solution of ethanol)
λ max : 280 nm
b) Solubility: Soluble.in water, readily soluble in a 50 % by weight aqueous solution of ethanol, insoluble in ethanol.

Test Example

The following substances are used as reagents in Test Examples and Examples.

1) L-Ascorbic acid:
L (+) -Ascorbic acid manufactured by Nacalai Tesque, Inc. was used.
2) Rutin:
Rutin manufactured by Nacalai Tesque, Inc. was used.
3) Chlorogenic acid:
Chlorogenic acid manufactured by Wako Pure Chemical Industries, Ltd. was used.

The above inhibitor for the generation of deterioration smell was added to a lemon-model drink to evaluate inhibiting effect on the generation of p-cresol and p-methylacetophenone.

[Test Example 36]

To a buffer solution of pH 3.0 adjusted with 1/10M citric acid-1/5M disodium hydrogenphosphate were added sucrose and citral so as to be 5 % by weight and 10 ppm, respectively, thereby preparing an acidic citral solution. To this solution was added each of the inhibitors for the generation of deterioration smell, while L-ascorbic acid, rutin or chlorogenic acid, each having potent antioxidant effect, was added as a control (L-ascorbic acid was added as a 1 % by weight aqueous solution, and two others as a 1 % by weight aqueous solution in a 50 % by weight aqueous solution of ethanol). 100 g each was packed into a 100 ml volume glass vial (with a cap made from polytetrafluoroethylene). Each vial was stored in a thermostat (50° C) for 7 days. Each acidic citral solution was extracted with dichloromethane and then determined for generated amounts of p-cresol and p-methylacetophenone by means of gas chromatography. In Table 36 are shown a generated amount of p-cresol or p-methylacetophenone, in terms of relative numerical value where a generated amount of p-cresol or p-methylacetophenone of the additive-free product stored at 50° C for 7 days is defined as 100.

Table 36

| Inhibitor for generation or antioxidant | Generated amount of p-cresol | Generated amount of p-methylacetophenone |
|---|---|---|
| Additive-free product stored under refrigeration | 0.0 | 0.0 |
| Additive-free product stored at 50° C | 100.0 | 100.0 |

(continued)

| Inhibitor for generation or antioxidant | Generated amount of p-cresol | Generated amount of p-methylacetophenone |
|---|---|---|
| Product added with Ashitaba extract (15 ppm) | 48.1 | 37.8 |
| Product added with avocado extract (15 ppm) | 26.4 | 55.5 |
| Product added with common plantain extract (15 ppm) | 19.2 | 26.0 |
| Product added with black tea leaves extract (15 ppm) | 17.1 | 16.4 |
| Product added with oolong tea leaves extract (15 ppm) | 20.5 | 35.0 |
| Product added with oriental senna Extract (15 ppm) | 29.6 | 24.3 |
| Product added with hawthorn Extract (15 ppm) | 50.2 | 43.3 |
| Product added with L-ascorbic acid (60 ppm) | 78.5 | 98.1 |
| Product added with rutin (60 ppm) | 255.4 | 103.6 |
| Product added with chlorogenic acid (60 ppm) | 257.3 | 102.8 |

[Test Example 37] Lemon-flavored drink

50 g of sugar, 1 g of citric acid, 2 g of citral-containing lemon flavor and a 1 % by weight solution of each inhibitor for the generation of deterioration smell in a 50 % by weight aqueous solution of ethanol in a proper amount to give a concentration as shown in Table 37 were added and made up to a total amount of 1000 g with purified water. As controls, there were similarly prepared solutions wherein 6 g each of antioxidants (L-ascorbic acid, rutin and chlorogenic acid) instead of the inhibitors for the generation of deterioration smell was added in its 1 % by weight solution of a 50 % by weight aqueous solution of ethanol. The solution was sterilized at 70° C for 10 minutes, packed into a can to prepare a lemon-flavored drink, which was then stored in a thermostat at 50° C for 7 days. Sensory test was carried out by selecting a panel consisting of skilled 10 experts. As control lemon-flavored drinks, there were used the products stored under refrigeration free of inhibitors for the generation of deterioration smell and antioxidants (evaluation score: 0) and the products stored at 50° C for 7 days free of inhibitors for the generation of deterioration smell and antioxidants (evaluation score: 4) to evaluate degree of flavor deterioration of each lemon-flavored drink. The results are as given in Table 37. In Table 37, score for evaluation is an average of each panel as marked according to the following score standard.

(Score standard)

Unpalatable taste or off odor* felt very strongly: 4 points
Unpalatable taste or off odor* felt strongly: 3 points
Unpalatable taste or off odor* felt: 2 points
Unpalatable taste or off odor* felt to some degree: 1 point
Unpalatable taste or off odor* not felt: 0 point
* p-Cresol-like (odor of chemicals) or p-methylacetophenone-like (odor of cinnamon) off odor

Table 37 Evaluation results from heating test of lemon-flavored drink

| Inhibitor for generation or antioxidant | Average of sensory evaluation |
|---|---|
| Additive-free product stored under refrigeration | 0.0 |
| Additive-free product stored at 50° C | 4.0 |
| Product added with Ashitaba extract (15 ppm) | 1.5 |
| Product added with avocado extract (15 ppm) | 1.6 |
| Product added with common plantain extract (15 ppm) | 0.9 |
| Product added with black tea leaves extract (15 ppm) | 1.2 |
| Product added with oolong tea leave extract (15 ppm) | 1.4 |
| Product added with oriental senna extract (15 ppm) | 1.0 |
| Product added with hawthorn extract (15 ppm) | 1.1 |
| Product added with L-ascorbic acid (60 ppm) | 2.7 |
| Product added with rutin (60 ppm) | 3.2 |
| Product added with chlorogenic acid (60 ppm) | 3.4 |

As is apparent from Table 37, the generation of p-cresol-like or p-methylacetophenone-like deterioration smell could be strongly inhibited by adding an inhibitor for the generation of deterioration smell comprising an extract of Ashitaba, avocado, common plantain, black tea leaves, oolong tea leaves, oriental senna or hawthorn. On the other hand, inhibiting effect for the generation of p-cresol-like or p-methylacetophenone-like deterioration smell could hardly be observed even by adding rutin, chlorogenic acid or L-ascorbic acid.

[Test Example 38] Model base for weakly acidic rinse (pH 2.95)

A model base for weakly acidic rinse was prepared according to the following formulation.

| | |
|---|---|
| Methyl parahydroxybenzoate | 0.1 g |
| Polyoxyethylene hardened castor oil | 0.3 g |
| 95 % Ethanol | 1.0 g |
| Citric acid | 2.0 g |
| Sodium citrate | 0.9 g |
| Purified water | 96.6 g |

To 100 g of the above model base were added 0.5 g of lemon fragrance and 0.3 g of a 1 % by weight solution of each inhibitor for the generation of deterioration smell in a 50 % by weight aqueous solution of ethanol to prepare a model base for weakly acidic rinse. The base was stored in a thermostat at 40° C for 14 days. There were similarly prepared model bases for weakly acidic rinse by adding L-ascorbic acid, rutin or chlorogenic acid as a comparative antioxidant in concentrations as shown in Table 38. Each base was stored in a thermostat at 40° C for 14 days to prepare a model base for weakly acidic rinse. Sensory test was carried out by selecting a panel consisting of skilled 10 experts. As a control, the scented model base product stored under refrigeration free of inhibitors for the generation of deterioration smell and antioxidants (evaluation score: 0) and the scented model base product stored at 40° C for 14 days free of inhibitors for the generation of deterioration smell and antioxidants (evaluation score: 4) were used, and the scented model base product added with inhibitors for the generation of deterioration smell and antioxidants was relatively evaluated for degree of flavor deterioration. The results are as given in Table 38. In Table 38, score for evaluation is an average of each panel as marked according to the following score standard.

(Score standard)

Off odor* felt very strongly: 4 points

Off odor* felt strongly: 3 points
Off odor* felt: 2 points
Off odor* felt to some degree: 1 point
Off odor* not felt: 0 point
* p-Cresol-like (odor of chemicals) or p-methylacetophenone-like (odor of cinnamon) off odor

Table 38 Evaluation results from heating test of model base for weakly acidic rinse

| Inhibitor for generation of deterioration smell or antioxidant | Average of sensory evaluation |
|---|---|
| Additive-free product stored under refrigeration | 0.0 |
| Additive-free product stored at 40° C | 4.0 |
| Product added with Ashitaba extract (30 ppm) | 1.2 |
| Product added with avocado extract (30 ppm) | 1.0 |
| Product added with common plantain extract (30 ppm) | 1.5 |
| Product added with black tea leaves extract (30 ppm) | 1.6 |
| Product added with oolong tea leave extract (30 ppm) | 1.3 |
| Product added with oriental senna extract (30 ppm) | 1.0 |
| Product added with hawthorn extract (30 ppm) | 1.8 |
| Product added with rutin (200 ppm) stored at 40° C | 3.7 |
| Product added with chlorogenic acid (200 ppm) stored at 40° C | 3.5 |
| Product added with L-ascorbic acid (200 ppm) stored at 40° C | 3.8 |

As is apparent from Table 38, the generation of p-cresol-like or p-methylacetophenone-like deterioration smell could be strongly inhibited by adding an inhibitor for the generation of deterioration smell comprising an extract of Ashitaba, avocado, common plantain, black tea leaves, oolong tea leaves, oriental senna or hawthorn. On the other hand, inhibiting effect for the generation of p-cresol-like or p-methylacetophenone-like deterioration smell could hardly be observed even by adding rutin, chlorogenic acid or L-ascorbic acid.

Example

[Example 36] Example with Ashitaba extract (Lactic acid bacteria drink)

20 g of fermented milk stock (a total solid matter content of 54 %, a fat-free dry matter content of 4 %) was diluted with distilled water to a total amount of 100g. Then, 0.1 g of lemon flavor and 0.3 g of a 1 % by weight aqueous solution of the Ashitaba extract in a 50 % by weight aqueous solution of ethanol were added and packed into a glass vessel. The vessel was sterilized (at 70° C for 10 minutes) to complete a lactic acid bacteria drink.

[Example 37] Example of avocado extract or hawthorn extract + common plantain extract (a mixture of a weight ratio 1: 1) (Yogurt drink)

A mixture of 94 g of milk and 6 g of skim milk powder was sterilized (at 90-95° C for 5 minutes). After cooling down to 48° C, a starter (lactic acid bacteria) was inoculated. This was fermented at 40° C for 4 hours. After cooling, it was stored at 5° C for use as yogurt base. On the other hand, a sugar solution was used which was prepared by mixing 20 g of white soft sugar, 1 g of pectin and 79 g of water, heating at 90-95° C for 5 minutes and hot-packing. A mixture of 60 g of the above yogurt base, 40 g of the above sugar solution, 0.1 g of citrus flavor and 0.3 g of a 1 % by weight solution of the avocado extract in a 50 % by weight aqueous solution of ethanol was processed by a homomixer to complete the drink. Similarly, a mixture of hawthorn extract + common plantain extract at a weight ratio of 1:1 was dissolved in a 50 % by weight aqueous solution of ethanol so as to give a concentration of 1 % by weight in terms of the mixture, and then the solution was added to 0.3 g of the above yogurt base to complete the yogurt drink.

[Example 38] Example of hawthorn.extract, oriental senna extract + oolong tea leaves extract (a mixture of a weight ratio 2:1) (Oral cleaning rinse)

Oral cleaning rinse was prepared by blending in the following formulation amounts.

| | |
|---|---|
| Ethanol | 15.00 g |
| Glycerol | 10.00 g |
| Polyoxyethylene hardened castor oil | 2.00 g |
| Saccharin sodium | 0.15 g |
| Sodium benzoate | 0.05 g |
| Flavor (citral-containing product) | 0.30 g |
| Sodium dihydrogenphosphate | 0.10 g |
| Coloring agent | 0.20 g |
| A 1 % by weight solution of the hawthorn extract in a 50 % by weight aqueous solution of ethanol. | 0.05 g |
| Purified water | 72.10 g |

Oral cleaning rinse was also prepared by adding the oriental senna extract + oolong tea leaves extract (a mixture of a weight ratio 2:1) in the same concentrations in the same manner as in the hawthorn extract.

[Example 39] Example of common plantain extract or oriental senna extract + black tea leaves extract (a mixture of a weight ratio 1:2) (Lotion)

Lotion was prepared according to the following formulation.

| | |
|---|---|
| 1,3-Butylene glycol | 60.0 g |
| Glycerol | 40.0 g |
| Oleyl alcohol | 1.0 g |
| POE (20) sorbitan monolaurate | 5.0 g |
| POE (15) lauryl alcohol | 5.0 g |
| 95 % Ethanol | 100.0 g |
| Fragrance (citral-containing product) | 2.0 g |
| Methyl parahydroxybenzoate | 1.0 g |
| Gardenia yellow coloring | 0.1 g |
| A 1 % by weight of the common plantain extract in a 50 % by weight aqueous solution of ethanol | 4.0 g |
| Purified water | 781.9 g |

Lotion was also prepared by adding the oriental senna extract + black tea leaves extract (a mixture of a weight ratio 1:2) in the same manner as in the common plantain extract.

Industrial Applicability

Flavor deterioration of oral compositions such as foods etc., which are susceptible to influence by light, heat, oxygen, etc., can be inhibited by adding a flavor deterioration inhibitor of this invention. The present inhibitor can exhibit prominent inhibiting effect, in particular, on deterioration by light and keep flavor over a long period. So, superior effect can be exerted when applied to oral compositions packed in transparent glass containers, semi-transparent plastic containers, transparent bags, etc., which are susceptible to influence by light irradiation. And further, the present flavor deterioration inhibitor can be widely applied, since taste and odor of the present inhibitor itself could not influence on the original scent of oral compositions.
And further, the present flavor deterioration inhibitor can be applied to citral or citral-containing products to effectively inhibit the generation of deterioration smell derived from citral with lapse of time or by heating (p-cresol and p-methylacetophenone). Thus, the generation of deterioration smell, which may gradually proceed in every stage of manufacture, distribution and storage of the citral-containing products, can be efficiently inhibited and fresh feeling can be maintained, whereby quality of products may be kept inexpensively and stably over a long period.

**EP 1 554 938 B1**

**Claims**

1. An oral composition comprising a flavor deterioration inhibitor, which comprises an extract obtained by extracting Ashitaba, avocado, common plantain, oriental senna, hawthorn, semi-fermented tea leaves or fermented tea leaves with water, a polar organic solvent or a mixture thereof in an amount of 1-500 ppm.

2. A method for inhibiting flavor deterioration of an oral composition, which comprises adding a flavor deterioration inhibitor, which comprises an extract obtained by extracting Ashitaba, avocado, common plantain, oriental senna, hawthorn, semi-fermented tea leaves or fermented tea leaves with water, a polar organic solvent or a mixture thereof to said oral composition at 1-500 ppm.

3. A flavor wherein an flavor deterioration inhibitor is added at 0.005-5 % by weight, wherein said inhibitor comprises an extract obtained by extracting Ashitaba, avocado, common plantain, oriental senna, hawthorn, semi-fermented tea leaves or fermented tea leaves with water, a polar organic solvent or a mixture thereof.

4. A method for inhibiting deterioration of a flavor, which comprises adding a flavor deterioration inhibitor, which comprises an extract obtained by extracting Ashitaba, avocado, common plantain, oriental senna, hawthorn, semi-fermented tea leaves or fermented tea leaves with water, a polar organic solvent or a mixture thereof to said flavor at 0.005-5 % by weight.

5. An inhibitor for the generation of deterioration smell of citral or a citral-containing product, which comprises an extract obtained by extracting Ashitaba, avocado, common plantain or oriental senna with a. polar organic solvent, water or a mixture thereof.

6. An inhibitor for the generation of deterioration smell of citral or a citral-containing product according to claim 5, wherein the deterioration smell is caused by p-cresol, or p-methylacetophenone.

7. An inhibitor for the generation of deterioration smell of citral or a citral-containing product according to claim 5 or 6, wherein said citral-containing product is a citrus-series flavor or citrus-series fragrance.

8. An inhibitor for the generation of deterioration smell of a citral-containing product according to claim 5 or 6, wherein said citral-containing product is a citrus-series drink or citrus-series confectionery.

9. An inhibitor for the generation of deterioration smell of a citral-containing product according to claim 5 or 6, wherein said citral-containing product is a fragrance or a cosmetic.

10. A method for inhibiting the generation of deterioration smell of citral or a citral-containing product wherein an inhibitor for the generation of deterioration smell of citral or a citral-containing product, which comprises an extract obtained by extracting Ashitaba, avocado, common plantain, oriental senna, hawthorn, semi-fermented tea leaves or fermented tea leaves with a polar organic solvent, water or a mixtures thereof is added at 1-500 ppm.

11. A method for inhibiting the generation of deterioration smell of citral or a citral-containing product according to claim 10, wherein the deterioration smell is caused by p-cresol or p-methylacetophenone.

12. A method for inhibiting the generation of deterioration smell of citral or a citral-containing product according to claim 10 or 11, wherein said citral-containing product is a citrus-series flavor or citrus-series fragrance.

13. A method for inhibiting the generation of deterioration smell of citral or a citral-containing product according to claim 10 or 11, wherein said citral-containing product is a citrus-series drink or citrus-series confectionery.

14. A method for inhibiting the generation of deterioration smell of citral or a citral-containing product according to claim 10 or 11, wherein said citral-containing product is a fragrance or a cosmetic.

15. A citral or a citral-containing product wherein an inhibitor for the generation of deterioration smell of citral or a citral-containing product, which comprises an extract obtained by extracting Ashitaba, avocado, common plantain, oriental senna, hawthorn, semi-fermented tea leaves or fermented tea leaves with a polar organic solvent, water or a mixture thereof added at 1-500 ppm.

16. Use of an extract obtained by extracting Ashitaba, avocado, common plantain, oriental senna, hawthorn, semi-fermented tea leaves or fermented tea leaves with water, a polar organic solvent or a mixture for the production of a flavor deterioration inhibitor or an inhibitor for the generation of deterioration smell of citral or citral-containing product.

**Patentansprüche**

1. Orale Zusammensetzung, umfassend einen Inhibitor der Geschrnacksbeeinträchtigung, der einen Extrakt umfasst, welcher durch Extrahieren von Ashitaba, Avocado, Wegerich ("common plantain"), Senna ("oriental senna"), Weißdorn, halbfermentierten Teeblättern oder fermentierten Teeblättern mit Wasser, einem polaren organischen Lösungsmittel oder einem Gemisch davon erhalten wird, in einer Menge von 1 bis 500 ppm.

2. Verfahren zum Hemmen der Geschmacksbeeinträchtigung einer oralen Zusammensetzung, welches das Zufügen eines Inhibitors der Geschmacksbeeinträchtigung, der einen Extrakt umfasst, welcher durch Extrahieren von Ashitaba, Avocado, Wegerich, Senna, Weißdorn, halbfermentierten Teeblättern oder fermentierten Teeblättern mit Wasser, einem polaren organischen Lösungsmittel oder einem Gemisch davon erhalten wird, zu der oralen Zusammensetzung in einer Menge von 1 bis 500 ppm umfasst.

3. Geschmacksstoff, wobei ein Inhibitor der Geschmacksbeeinträchtigung in einer Menge von 0,005 bis 5 Gew.-% zugegeben wird, wobei der inhibitor einen Extrakt umfasst, welcher durch Extrahieren von Ashitaba, Avocado, Wegerich, Senna, Weißdorn, halbfermentierten, Teeblättern oder fermentierten Teeblättern mit Wasser, einem polaren organischen Lösungsmittel oder einem Gemisch davon erhalten wird.

4. Verfahren zum Hemmen der Beeinträchtigung eines Geschmacksstoffs, welches das Zufügen eines Inhibitors der Geschmacksbeeinträchtigung, der einen Extrakt umfasst, welcher durch Extrahieren von Ashitaba, Avocado, Wegerich, Senna, Weißdorn, halbfermentierten Teeblättern oder fermentierten Teeblättern mit Wasser, einem polaren organischen Lösungsmittel oder einem Gemisch davon erhalten wird, zu dem Geschmacksstoff in einer Menge von 0,005 bis 5 Gew.-% umfasst.

5. Inhibitor der Erzeugung von Zersetzungsgeruch von Citral oder eines Citral-enthaltenden Produkts, der einen Extrakt umfasst, welcher durch Extrahieren von Ashitaba, Avocado, Wegerich oder Senna mit einem polaren, organischen Lösungsmittel, Wasser oder einem Gemisch davon erhalten wird.

6. Inhibitor der Erzeugung von Zersetzungsgeruch von Citral oder eines Citral-enthaltenden Produkts nach Anspruch 5, wobei der Zersetzungsgeruch durch p-Kresol oder p-Methylacetophenon verursacht wird.

7. Inhibitor der Erzeugung von Zersetzungsgeruch von Citral oder eines Citral-enthaltenden Produkts nach Anspruch 5 oder 6, wobei das Citral-enthaltende Produkt ein Citrus-Geschmacksstoff oder ein Citrus-Duftstoff ist.

8. Inhibitor der Erzeugung von Zersetzungsgeruch eines Citral-enthaltenden Produkts nach Anspruch 5 oder 6, wobei das Citral-enthaltende Produkt ein Citrus-Getränk oder Citrus-Süßigkeiten darstellt.

9. Inhibitor der Erzeugung von Zersetzungsgeruch eines Citral-enthaltenden Produkts nach Anspruch 5 oder 6, wobei das Citral-enthaltende Produkt ein Duftstoff oder ein Kosmetikum ist.

10. Verfahren zum Hemmen der Erzeugung von Zersetzungsgeruch von Citral oder eines Citral-enthaltenden Produkts, wobei ein Inhibitor der Erzeugung von Zersetzungsgeruch von Citral oder eines Citral-enthaltenden Produkts, der einen Extrakt umfasst, weicher durch Extrahieren von Ashitaba, Avocado, Wegerich, Senna, Weißdorn, halbfermentierten Teeblättern oder fermentierten Teeblättern mit einem polaren organischen Lösungsmittel, Wasser oder einem Gemisch davon erhalten wird, in einer Menge von 1 bis 500 ppm zugegeben wird.

11. Verfahren zum Hemmen der Erzeugung von Zersetzungsgeruch von Citral oder eines Citral-enthaltenden Produkts nach Anspruch 10, wobei der Zersetzungsgeruch durch p-Kresol oder p-Methylacetophenon verursacht wird.

12. Verfahren zum Hemmen der Erzeugung von Zersetzungsgeruch von Citral oder eines Citral-enthaltenden Produkts nach Anspruch 10 oder 11, wobei das Citral-enthaltende Produkt ein Citrus-Geschinacksstoff oder ein Citrus-Duftstoff ist.

**13.** Verfahren zum Hemmen der Erzeugung von Zersetzungsgeruch von Citral oder eines Citral-enthaltenden Produkts nach Anspruch 10 oder 11, wobei das Citral-enthaltende Produkt ein Citrus-Getränk oder Citrus-Süßigkeiten darstellt.

**14.** Verfahren zum Hemmen der Erzeugung von Zersetzungsgeruch von Citral oder eines Citral-enthaltenden Produkts nach Anspruch 10 oder 11, wobei das Citral-enthaltende Produkt ein Duftstoff oder ein Kosmetikum ist.

**15.** Citral oder Citral-enthaltendes Produkt, wobei ein inhibitor der Erzeugung von Zersetzungsgeruch von Citral oder eines Citral-enthaltenden Produkts, der einen Extrakt umfasst, welcher durch Extrahieren von Ashitaba, Avocado, Wegerich, Senna, Weißdorn, halbfermentierten Teeblättern oder fermentierten Teeblättern mit einem polaren organischen Lösungsmittel, Wasser oder einem Gemisch davon erhalten wird, in einer Menge von 1 bis 500 ppm zugegeben wird.

**16.** Verwendung eines Extrakts, welcher durch Extrahieren von Ashitaba, Avocado, Wegerich, Senna, Weißdorn, halbfermentierten Teeblättern oder fermentierten Teeblättern mit Wasser, einem polaren organischen Lösungsmittel oder einem Gemisch davon erhalten wird, zum Herstellen eines Inhibitors der Geschmacksbeeinträchtigung oder eines Inhibitors der Erzeugung von Zersetzungsgeruch von Citral oder eines Citral-enthaltenden Produkts.

**Revendications**

**1.** Composition orale comprenant un inhibiteur de dégradation d'arôme, qui comprend un extrait obtenu par extraction de Ashitaba, d'avocat, de plantain commun, de Senna oriental, d'aubépine, de feuilles de thé semi-fermentées ou de feuilles de thé fermentées avec de l'eau, un solvant organique, polaire ou un mélange de ceux-ci en une quantité de 1 à 500 ppm.

**2.** Procédé pour inhiber la dégradation d'arome d'une composition orale, qui comprend l'ajout d'un de dégradation d'arome, qui comprend un extrait obtenu par extraction de Ashitaba, d'avocat, de plantain commun, de Senna oriental, d'aubépine, de feuilles de thé or de feuilles de thé fermentées avec de l'eau, un solvant organique polaire ou un mélange de ceux-ci à ladite composition orale à 1 à 500 ppm,

**3.** Arome dans lequel un inhibiteur de dégradation d'arome est ajouté à 0,005 à 5% en poids, dam lequel ledit inhibiteur comprend un extrait obtenu par extraction de Ashitaba, d'avocat, de plantain commun, de Senna oriental, d'aubépine, de feuilles de thé semi-fementées ou de feuilles de thé fermentées avec de l'eau, un solvant organique polaire ou un mélange de ceux-ci.

**4.** Procédé pour inhiber la dégradation d'un arome, qui comprend l'ajout d'un inhibiteur de dégradation d'arome, qui comprend un extrait obtenu par extraction de Ashitaba, d'avocat, de plantain commun, de Senna oriental, d'aubépine, de feuilles de thé semi-fermentées ou de feuilles de thé fermentées avec de l'eau, un solvant organique polaire ou un mélange de ceux-ci audit arome à 0,005 à 5 % en poids.

**5.** Inhibiteur de la génération d'odeur de dégradation de citral ou d'un produit contenant du citral, qui comprend un extrait obtenu par extraction de Ashitaba, d'avocat, de plantain commun ou de Senna oriental avec un solvant organique polaire, de l'eau ou un mélange de ceux-ci.

**6.** Inhibiteur de la génération d'odeur de dégradation de citral ou d'un produit contenant du citral selon la revendication 5, **caractérisé en ce que** l'odeur de dégradation est causée par le p-crésol ou la p-méthylacétophénone.

**7.** Inhibiteur de la génération d'odeur de dégradation de citral ou d'un produit contenant, du citral selon la revendication 5 ou 6, **caractérisé en ce que** ledit produit contenant du citral est un arôme de la série des agrumes ou un parfum de la série des agrumes.

**8.** Inhibiteur de la génération d'odeur de dégradation d'un produit contenant du citral selon la revendication 5 ou 6, **caractérisé en ce que** ledit produit contenant du citral est une boisson de la série des agrumes ou une confiserie de la série des agrumes.

**9.** Inhibiteur de la génération d'odeur de dégradation d'un produit contenant du citral selon la revendication 5 ou **caractérisé en ce que** ledit produit contenant du citral est un parfum ou un produit cosmétique.

**10.** Procédé d'inhibition de la génération d'odeur de dégradation de citral ou d'un produit contenant du citral **caractérise en ce qu'**un de la génération d'odeur de dégradation de citral ou d'un produit contenant du citral, qui comprend un extrait obtenu par extraction de Ashitaba, d'avocat, de plantain commun, de Senna oriental, d'aubépine, de feuilles de thé semi-fermentées ou de feuilles de thé fermentées avec un solvant organique polaire, de l'eau ou un mélange de ceux-ci est ajouté à 1 à 500 ppm.

**11.** Procédé pour inhiber la génération d'odeur de dégradation de citral ou d'un produit contenant du citral selon la revendication 10, **caractérisé en ce que** l'odeur de dégradation est causée par le p-crésol ou la p-méthylacétophènone.

**12.** Procédé pour inhiber la génération d'odeur de dégradation de citral ou d'un produit contenant du citral selon la revendication 10 ou 11, **caractérisé en ce que** ledit produit contenant du citral est un arôme de la série des agrumes ou un parfum de la série des agrumes.

**13.** Procédé pour inhiber la génération d'odeur de dégradation, de citral ou d'un produit contenant du citral selon la revendication 10 ou 11, **caractérisé en ce que**, ledit produit contenant du citral est une boisson de la série des agrumes ou une confiserie de la série des agrumes.

**14.** Procédé pour inhiber la génération d'odeur de dégradation de citral ou d'un produit contenant du citral selon la revendication 10 ou 11, **caractérisé en ce que** ledit produit contenant du citral est un parfum ou un produit cosmétique.

**15.** Citral ou produit contenant du citral **caractérisé en ce qu'**un inhibiteur de la génération d'odeur de dégradation de citral ou d'un produit contenant du citral, qui comprend un extrait obtenu par extraction de Ashitaba, d'avocat, de plantain commun, de Senna oriental, d'aubépine, de feuilles de thé semi-fermentées ou de feuilles de the fermentées avec un solvant organique polaire, de l'eau ou un mélange de ceux-ci est ajouté à 1 à 500 ppm.

**16.** Utilisation d'un extrait obtenu par extraction de Ashitaba, d'avocat, de plantain commun, de Senna oriental, d'aubépine, de feuilles de thé semi-fermentées ou de feuilles de thé fermentées avec de l'eau, un solvant organique polaire ou un de ceux-ci pour la production d'un inhibiteur de dégradation d'arôme ou d'un inhibiteur de la génération d'odeur de dégradation de citral ou d'un produit contenant du citral.

# Fig. 1

## LEAVES/WATER EXTRACT

WAVELENGTH(nm)

# Fig. 2

## LEAVES/50%BY WEIGHT ETHANOL EXTRACT

WAVELENGTH(nm)

# Fig. 3

**STEMS/50%BY WEIGHT ETHANOL EXTRACT**

WAVELENGTH(nm)

# Fig. 4

**LEAVES /95%BY WEIGHT ETHANOL EXTRACT**

WAVELENGTH(nm)

# Fig. 5

**LEAVES/HP-20 PURIFIED PRODUCT**

# Fig. 6

**PERICARPS/WATER EXTRACT**

# Fig. 7

**PERICARPS/50%BY WEIGHT ETHANOL EXTRACT**

WAVELENGTH(nm)

# Fig. 8

**SEEDS/50%BY WEIGHT ETHANOL EXTRACT**

WAVELENGTH(nm)

# Fig. 9

**PERICARPS/95%BY WEIGHT ETHANOL EXTRACT**

WAVELENGTH(nm)

# Fig. 10

**PERICARPS/HP-20 PURIFIED PRODUCT**

WAVELENGTH(nm)

# Fig. 11

**WATER EXTRACT**

# Fig. 12

**50%BY WEIGHT ETHANOL EXTRACT**

# Fig. 13

**95%BY WEIGHT ETHANOL EXTRACT**

WAVELENGTH(nm)

# Fig. 14

**HP-20 PURIFIED PRODUCT**

WAVELENGTH(nm)

# Fig. 15

### SEEDS/25%BY WEIGHT ETHANOL EXTRACT

WAVELENGTH(nm)

# Fig. 16

### LEAVES/50%BY WEIGHT ETHANOL EXTRACT

WAVELENGTH(nm)

# Fig. 17

**SEEDS/95%BY WEIGHT ETHANOL EXTRACT**

# Fig. 18

**LEAVES/HP-20 PURIFIED PRODUCT**

# Fig. 19

**WATER EXTRACT**

# Fig. 20

**50%BY WEIGHT ETHANOL EXTRACT**

# Fig. 21

**95%BY WEIGHT ETHANOL EXTRACT**

# Fig. 22

**HP-20 PURIFIED PRODUCT**

# Fig. 23

**WATER EXTRACT**

WAVELENGTH(nm)

# Fig. 24

**50%BY WEIGHT ETHANOL EXTRACT**

WAVELENGTH(nm)

# Fig. 25

**95%BY WEIGHT ETHANOL EXTRACT**

WAVELENGTH(nm)

# Fig. 26

**WATER EXTRACT**

WAVELENGTH(nm)

# Fig. 27

**50%BY WEIGHT ETHANOL EXTRACT**

WAVELENGTH(nm)

# Fig. 28

**95%BY WEIGHT ETHANOL EXTRACT**

WAVELENGTH(nm)

# Fig. 29

**ASHITABA EXTRACT**

X-axis: WAVELENGTH(nm)
Y-axis: ABSORBANCE

# Fig. 30

**AVOCADO EXTRACT**

X-axis: WAVELENGTH(nm)
Y-axis: ABSORBANCE

# Fig. 31

**COMMON PLANTAIN EXTRACT**

# Fig. 32

**BLACK TEA EXTRACT**

# Fig. 33

**OOLONG TEA EXTRACT**

# Fig. 34

**ORIENTAL SENNA EXTRACT**

# Fig. 35

**HAWTHORN EXTRACT**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4021450 B
- JP 4027374 A
- JP 62269642 A

**Non-patent literature cited in the description**

- **PETER SCHIEBERLE ; WERNER GROSCH.** *J. Agric. Food Chem.,* 1988, vol. 36, 797-800
- **VAL E. PEACOCK ; DAVID W. KUNEMAN.** *J. Agric. Food Chem.,* 1985, vol. 33, 330-335